# EUROPEAN PATENT SPECIFICATION

(11) **EP 4 287 068 B1**
(45) Date of publication and mention of the grant of the patent: **30.09.2026**
(21) Application number: 22774161.8
(22) Date of filing: 21.03.2022
(51) Int. Cl.: G06V 20/00, G06V 10/774, G06V 10/82, G06N 3/045, G06N 3/0464, G06N 3/0475, G06N 3/0895, G06N 3/09

(54) **MODEL TRAINING METHOD, SCENE RECOGNITION METHOD, AND RELATED DEVICE**
MODELLTRAININGSVERFAHREN, SZENENERKENNUNGSVERFAHREN UND ZUGEHÖRIGE VORRICHTUNG
PROCÉDÉ D'ENTRAÎNEMENT DE MODÈLE, PROCÉDÉ DE RECONNAISSANCE DE SCÈNE ET DISPOSITIF ASSOCIÉ

(30) Priority: 22.03.2021 CN 202110301843
(43) Date of publication of application: 06.12.2023
(73) Proprietor: Huawei Technologies Co., Ltd., Shenzhen, Guangdong 518129 (CN)
(72) Inventor: QI, Xiangtao, Shenzhen, Guangdong 518129 (CN); LIU, Yan, Shenzhen, Guangdong 518129 (CN)
(74) Representative: Körber, Martin Hans
(86) International application number: PCT/CN2022/081883
(87) International publication number: WO 2022/199500

(56) References cited:
- CN-A- 108 038 491
- CN-A- 108 961 302
- CN-A- 109 727 264
- CN-A- 112 204 565
- CN-A- 112 348 117
- CN-A- 112 348 117
- CN-A- 112 446 398
- JP-A- 2004 062 605
- US-A1- 2020 086 879
- JI ZHONG ET AL: "Balance between object and background: Object-enhanced features for scene image classification", ARXIV, vol. 120, 27 March 2013 (2013-03-27), pages 15 - 23, XP028696899, DOI: 10.1016/J.NEUCOM.2012.02.054
- JI ZHONG; WANG JING; SU YUTING; SONG ZHANJIE; XING SHIKAI: "Balance between object and background: Object-enhanced features for scene image classification", NEUROCOMPUTING, ELSEVIER, AMSTERDAM, NL, vol. 120, 1 January 1900 (1900-01-01), AMSTERDAM, NL , pages 15 - 23, XP028696899, ISSN: 0925-2312, DOI: 10.1016/j.neucom.2012.02.054

## Description

### TECHNICAL FIELD

This application relates to the field of artificial intelligence technologies, and in particular, to a model training method, a scene recognition method, and a related device in the field of computer vision in the application field of artificial intelligence.

### BACKGROUND

Artificial intelligence (artificial intelligence, AI) refers to a theory, method, technology, and application system that are used to simulate, extend, and expand human intelligence by using a digital computer or a machine controlled by a digital computer, to perceive environment, obtain knowledge, and obtain an optimal result by using the knowledge.

The application field of artificial intelligence includes the field of computer vision, and scene recognition is an important branch technology in the field of computer vision. Scene recognition refers to the recognition (or "classification") of environment that can be reflected in an image or environment in which a subject (a person or an object) is located. The purpose is to obtain scene information by extracting and analyzing features in a scene image, to recognize a scene to which the image belongs.

Most scene recognition apparatuses in the current technologies recognize the scene image by using a general image recognition model (which is configured to recognize both an object and a scene). Accuracy of the scene recognition by using the general image recognition model is limited, and an application scene of the scene recognition is limited.

CN 112 348 117 A discloses a scene recognition method, device for increasing accuracy.

### SUMMARY

Embodiments of this application provide a model training method, a scene recognition method, and a related device, to improve accuracy of scene recognition. The invention is defined in the independent claims. Additional features of the invention are provided in the dependent claims. In the following, parts of the description and drawings referring to embodiments which are not covered by the claims are not embodiments of the invention, but are examples useful for understanding the invention.

According to a first aspect, this application provides a model training method, where the method is applied to a training device, and the method includes: The training device obtains a first training data set, where the first training data set includes a plurality of first images, the first image is a scene image, for example, one first image is an image of an "office" scene, and the first image may include an image of an object irrelevant to scene recognition. The training device recognizes a first region in the first image by using an object detection model, where the first region is an image region irrelevant to scene recognition. Then, the training device performs masking on the first region to obtain a third image. A function of the masking is to block the first region. Then, the training device obtains a plurality of sample object images generated by an image generative model, where the sample object image is an image of an object irrelevant to the scene recognition. The training device respectively replaces a masked first region in the third image with the plurality of sample object images, to obtain a plurality of target images. A plurality of target images are obtained through combination. In terms of data volume, a quantity of images in the first training data set is expanded. On the other hand, in terms of a difference between images, for pictures of a same category, an image of a background that is relevant to scene recognition is retained in the third image, and a sample object image generated by the image generative model is used as a difference image between newly synthesized target images. Finally, the training device trains a first convolutional neural network by using a data set of the target image, and trains a second convolutional neural network by using a data set of the third image, to obtain a scene recognition model, where the scene recognition model includes the first convolutional neural network and the second convolutional neural network. In this embodiment of this application, the training device trains the first convolutional neural network through a large quantity of newly synthesized target images, and an image of an object irrelevant to the scene recognition is introduced into scene images of a same category, so that the scene recognition model pays less attention to a feature of a difference image in the scene images. In this way, the adverse impact of an intra-category difference on classification performance of the scene recognition model is reduced. In addition, after blocking the image region irrelevant to the scene recognition, the training device trains the second convolutional neural network by using an image (that is, the third image) that is relevant to the scene recognition, so that the second convolutional neural network can learn a difference feature between different scene categories more easily. Thus, the adverse impact of an inter-category similarity on the classification performance of the scene recognition model is reduced. The scene recognition model obtained by the training device can reduce a negative impact on the classification performance of the scene recognition model caused by the intra-category difference of the scene images of the same category, and a negative impact on the classification performance of the scene recognition model caused by the inter-category similarity of different scene categories, thereby improving accuracy of scene recognition.

The method further includes: The training device inputs the first image to an image recognition model, where the image recognition model is a general image recognition model (which is configured for both image recognition and scene recognition). The training device obtains a first classification result of the first image and a heat map of the first image by using the image recognition model, where the heat map is used to display a region in which the target object is located, an image feature of the target object is an image feature irrelevant to the scene recognition, and a category indicated by the first classification result is a non-scene category or an incorrect scene category. The training device performs masking on a second region other than the first region in which the target object is located in the first image, that is, blocks the second region, to obtain a second image (that is, an image that includes only the target object). Then, the training device trains a first model by using a second training data set, to obtain an object detection model, where the second training data set includes a plurality of sample data, the sample data includes input data and output data, the input data is the second image, and the output data is location coordinates, and the location coordinates indicate a region in which the target object is located. In this embodiment, the training device may determine, through the heat map of the first image, a region in the first image that has the greatest impact on which the image recognition model makes a classification decision, can determine, through the heat map, a location of the target object irrelevant to the scene recognition, and train the first model (for example, a neural network) through the second image. An object detection model is obtained. The object detection model is configured to recognize which portion of a region in the scene image irrelevant to scene recognition, and may further determine which portion of the region in the scene image that is relevant to scene recognition.

In an optional implementation, the method further includes: The training device trains a generative adversarial network GAN by using the second image, to obtain the image generative model. The image generative model is configured to generate a large quantity of a plurality of sample object images that are irrelevant to the scene recognition, so that a target image used for training the scene recognition model can be obtained. The plurality of target images obtained from the plurality of sample object images not only expand a quantity of images in the first training data set, but also can be used as a difference image between newly synthesized target images for the picture of the same category. In this way, the adverse impact of the intra-category difference on the classification performance of the scene recognition model is reduced, thereby improving the performance of the scene recognition model.

In an optional implementation, both the target image and the third image correspond to a label of a first category, and the training a first convolutional neural network by using the target image, and training a second convolutional neural network by using the third image may specifically include: The training device extracts an image feature of the target image through a first convolutional layer of the first convolutional neural network, extracts an image feature of the third image through a second convolutional layer of the second convolutional neural network, and outputs the image feature of the third image to the first convolutional layer, to fuse with the image feature of the target image. Then, the fused image feature is output to the output layer of the first convolutional neural network, and the label of the first category is output through the output layer (for example, a fully connected layer and a classifier) of the first convolutional neural network. The image feature that is of the third image and that is extracted by the second convolutional neural network is an image feature that is in the first image and that is relevant to the scene recognition, the second convolutional neural network is equivalent to an attention model, and the second convolutional neural network fuses the extracted image feature to the last convolutional layer of the first convolutional neural network. In this way, the scene recognition model focuses more on the image feature that is relevant to the scene recognition. In addition, after an object image (the target object) irrelevant to the scene recognition is blocked, the second convolutional neural network is trained by using an image that is relevant to the scene recognition, so that the second convolutional neural network can learn a difference feature between different scene categories more easily. Thus, the adverse impact of the inter-category similarity on the classification performance of the scene recognition model is reduced.

According to a second aspect, an embodiment of this application provides a scene recognition method, applied to an execution device, and the method includes: The execution device obtains a to-be-recognized first scene image. Then the execution device detects a first region in which an object irrelevant to scene recognition is located in the first scene image by using an object detection model. The execution device performs masking on the first region to obtain a second scene image. Then, the execution device inputs the first scene image to a first convolutional neural network in a scene recognition model, inputs the second scene image to a second convolutional neural network in the scene recognition model, and outputs a classification result by using the scene recognition model. The first convolutional neural network is obtained by training by using a data set of a target image. The second convolutional neural network is obtained by training by using a data set of a third image. The target image is obtained by respectively replacing a first region in the third image with a plurality of sample object images generated by an image generative model. The third image is obtained by recognizing a first region that is in the first image and that is irrelevant to scene recognition by using the object detection model, and then performing masking on the first region. The first image is an image in a training data set. In this embodiment of this application, the first convolutional neural network is obtained by learning the target image, and the target image is obtained by synthesizing a same background image with a different difference object image (an image of an object irrelevant to the scene recognition). In this way, a degree of attention paid by the scene recognition model to an image feature that is in the first scene image and that is irrelevant to the scene recognition is reduced, thereby reducing a negative impact of an intra-category difference between scene images of a same category on classification performance of the scene recognition model. The second convolutional neural network is obtained by learning an image that is relevant to the scene recognition, so that the scene recognition image extracts an image feature of a portion of the image that is relevant to the scene recognition, and pays more attention to an image feature that is in the first scene image and that is relevant to the scene recognition. In this way, a negative impact of an inter-category similarity of different categories of the scene images on the classification performance of the scene recognition model can be reduced. In this way, accuracy of a classification result of the first scene image is greatly improved.

The execution device inputs the first scene image to a first convolutional neural network in a scene recognition model, inputs the second scene image to a second convolutional neural network in the scene recognition model, and outputs a classification result by using the scene recognition model may specifically include: The execution device extracts an image feature of the first scene image through a first convolutional layer of the first convolutional neural network, extracts an image feature of the second scene image through a second convolutional layer of the second convolutional neural network, and outputs the image feature of the second scene image to the first convolutional layer, to fuse with the image feature of the first scene image. In this way, the scene recognition model focuses on global information. The first convolutional neural network outputs the fused image feature to the output layer, and outputs the classification result through an output layer (a fully connected layer and a classifier) of the first convolutional neural network.

In an optional implementation, if the classification result indicates a first scene, there is a correspondence between the first scene and a first noise reduction mode of a headset; and when the execution device is a terminal device, the execution device is connected to the headset, and the method further includes: The execution device adjusts a noise reduction mode of the headset to the first noise reduction mode based on the classification result. The execution device may recognize the scene image, and automatically adjust the noise reduction mode of the headset based on the classification result obtained through the scene recognition. A user does not need to manually set the noise reduction mode of the headset. Alternatively, when the execution device is a server, user equipment is connected to the headset, and the method further includes: The execution device sends the classification result to the user equipment, where the classification result is used to trigger the user equipment to adjust a noise reduction mode of the headset to the first noise reduction mode. In this embodiment of this application, the execution device may recognize the scene image, and send the classification result to the user equipment, so that the user equipment automatically adjusts the noise reduction mode of the headset based on the classification result obtained through the scene recognition, and the user does not need to manually set the noise reduction mode of the headset.

In an optional implementation, if the classification result indicates a first scene, there is a correspondence between the first scene and a first volume value; and when the execution device is a terminal device, the method further includes: The execution device adjusts system volume of the execution device to the first volume value based on the classification result. In this embodiment of this application, the execution device can adaptively adjust the system volume value based on the classification result of the scene image, and the user does not need to frequently adjust the system volume value of a mobile phone based on different environments. Alternatively, when the execution device is a server, the method further includes: The execution device sends a classification result to user equipment, where the classification result is used to trigger the user equipment to adjust system volume of the user equipment to the first volume value, so that the user equipment can automatically adjust the system volume value of the mobile phone based on the classification result obtained through the scene recognition. There is no need for the user to manually adjust the system volume value of the mobile phone, which improves user experience.

In an optional implementation, the obtaining a to-be-recognized first scene image may include: The execution device receives the to-be-recognized first scene image sent by the user equipment. Alternatively, the execution device collects the to-be-recognized first scene image through a camera or an image sensor.

According to a third aspect, an embodiment of this application provides a model training apparatus, including an obtaining module and a processing module.

The obtaining module is configured to obtain a first training data set, where the first training data set includes a plurality of first images.

The processing module is configured to: recognize a first region in the first image by using an object detection model, where the first region is an image region irrelevant to scene recognition; perform masking on the first region to obtain a third image; obtain a plurality of sample object images generated by an image generative model, where the sample object image is an image of an object irrelevant to the scene recognition; respectively replace a masked first region in the third image with the plurality of sample object images, to obtain a plurality of target images; and train a first convolutional neural network by using a data set of the target image, and train a second convolutional neural network by using a data set of the third image, to obtain a scene recognition model, where the scene recognition model includes the first convolutional neural network and the second convolutional neural network.

The processing module is further configured to: input the first image to an image recognition model, and obtain a first classification result of the first image and a heat map of the first image by using the image recognition model, where the heat map is used to display a region in which the target object is located, an image feature of the target object is an image feature irrelevant to the scene recognition, and a category indicated by the first classification result is a non-scene category or an incorrect scene category; perform masking on a second region in the first image other than the first region in which the target object is located in the first image, to obtain a second image; and train a first model by using a second training data set, to obtain the object detection model, where the second training data set includes a plurality of sample data, the sample data includes input data and output data, the input data is the second image, the output data is location coordinates, and the location coordinates indicate a region in which the target object is located.

In an optional implementation, the processing module is further configured to train a generative adversarial network GAN by using the second image, to obtain the image generative model.

In an optional implementation, both the target image and the third image correspond to a label of a first category. The processing module is further configured to: extract an image feature of the target image through a first convolutional layer of the first convolutional neural network, extract an image feature of the third image through a second convolutional layer of the second convolutional neural network, and output the image feature of the third image to the first convolutional layer, to fuse the image feature of the target image; and output, through an output layer of the first convolutional neural network, the label of the first category based on a fused image feature.

According to a fourth aspect, an embodiment of this application provides a scene recognition apparatus, including an obtaining module and a processing module.

The obtaining module is configured to obtain a to-be-recognized first scene image.

The processing module is configured to: detect a first region in which an object irrelevant to scene recognition is located in the first scene image by using an object detection model; perform masking on the first region to obtain a second scene image; and input the first scene image to a first convolutional neural network in a scene recognition model, input the second scene image to a second convolutional neural network in the scene recognition model, and output a classification result by using the scene recognition model. The first convolutional neural network is obtained by training by using a data set of the target image. The second convolutional neural network is obtained by training by using a data set of the third image. The target image is obtained by respectively replacing a first region in the third image with a plurality of sample object images generated by an image generative model. The third image is obtained by recognizing a first region that is in the first image and that is irrelevant to scene recognition by using the object detection model, and then performing masking on the first region. The first image is an image in a training data set.

In an optional implementation, the processing module is further configured to extract an image feature of the first scene image through a first convolutional layer of the first convolutional neural network, extract an image feature of the second scene image through a second convolutional layer of the second convolutional neural network, and output the image feature of the second scene image to the first convolutional layer, to fuse with the image feature of the first scene image. The classification result is output through an output layer of the first convolutional neural network based on a fused image feature.

In an optional implementation, the apparatus further includes a sending module, where if the classification result indicates a first scene, there is a correspondence between the first scene and a first noise reduction mode of a headset. The processing module is further configured to adjust a noise reduction mode of the headset to the first noise reduction mode based on the classification result. Alternatively, the sending module is configured to send the classification result to user equipment, where the classification result is used to trigger the user equipment to adjust the noise reduction mode of the headset to the first noise reduction mode.

In an optional implementation, if the classification result indicates a first scene, there is a correspondence between the first scene and a first volume value; and the processing module is further configured to adjust system volume of the execution device to the first volume value based on the classification result. Alternatively, the sending module is further configured to send the classification result to user equipment, where the classification result is used to trigger the user equipment to adjust system volume of the user equipment to the first volume value.

In an optional implementation, the obtaining module is further specifically configured to: receive the to-be-recognized first scene image sent by the user equipment; or collect the to-be-recognized first scene image through a camera or an image sensor.

According to a fifth aspect, an embodiment of this application provides an electronic device, including: a processor, where the processor is coupled to a memory, the memory is configured to store a program or instructions, and when the program or the instruction is executed by the processor, the electronic device is enabled to perform the method according to any one of the first aspect. Alternatively, when the program or the instruction is executed by the processor, the electronic device is enabled to perform the method according to any one of the second aspect.

According to a sixth aspect, an embodiment of this application provides a computer program product, where the computer program product includes computer program code, and when the computer program code is executed by a computer, the computer implements the method according to any one of the first aspect. Alternatively, when the computer program code is executed by a computer, the computer is enabled to implement the method according to any one of the second aspect.

According to a seventh aspect, an embodiment of this application provides a computer-readable storage medium, configured to store a computer program or instructions, where when the computer program or the instruction is executed, a computer is enabled to perform the method according to any one of the first aspect. Alternatively, when the computer program or instruction is executed, a computer is enabled to perform the method according to any one of the second aspect.

### BRIEF DESCRIPTION OF DRAWINGS

FIG. 1 is a schematic diagram of an artificial intelligence main architecture according to an embodiment of this application;
FIG. 2A and FIG. 2B are schematic diagrams of system architectures according to an embodiment of this application;
FIG. 3 is a schematic diagram of an original image and a heat map of the original image;
FIG. 4 is a schematic flowchart of steps of training an object detection model and an image generative model according to an embodiment of this application;
FIG. 5 is a schematic diagram of obtaining a second image after masking is performed on a first image according to an embodiment of this application;
FIG. 6 is a schematic diagram of an architecture of a scene recognition model according to an embodiment of this application;
FIG. 7 is a schematic flowchart of a step of training a scene recognition model according to an embodiment of this application;
FIG. 8 is a schematic diagram of obtaining a third image after masking is performed on a first image according to an embodiment of this application;
FIG. 9 is an architectural diagram of an object detection model and a scene recognition model according to an embodiment of this application;
FIG. 10 is a schematic flowchart of steps of an embodiment of a scene recognition method according to an embodiment of this application;
FIG. 11A, FIG. 11B, and FIG. 11C are schematic diagrams of setting interfaces of a correspondence between a headset noise reduction mode and a scene according to an embodiment of this application;
FIG. 12 is a schematic diagram of a scene in which a correspondence between a scene and a noise reduction mode is modified according to an embodiment of this application;
FIG. 13 is a schematic diagram of a setting interface of a correspondence between a scene and a system volume value according to an embodiment of this application;
FIG. 14 is a schematic diagram of a structure of an embodiment of a model training apparatus according to an embodiment of this application;
FIG. 15 is a schematic diagram of a structure of an embodiment of a neural network processor according to an embodiment of this application;
FIG. 16 is a schematic diagram of a structure of an electronic device according to an embodiment of this application;
FIG. 17 is a schematic diagram of a structure of an embodiment of a scene recognition apparatus according to an embodiment of this application; and
FIG. 18 is a schematic diagram of a structure of another electronic device according to an embodiment of this application.

### DESCRIPTION OF EMBODIMENTS

This application relates to the field of computer vision in the application field of artificial intelligence, and in particular, to scene recognition in the field of computer vision. First, a main framework of artificial intelligence is explained.

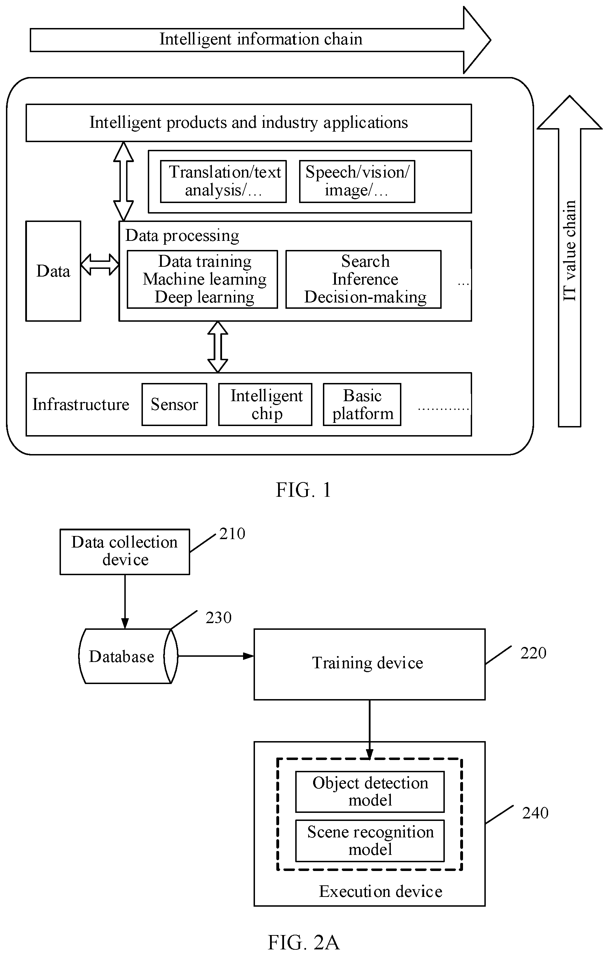

FIG. 1 is a schematic diagram of a main framework of artificial intelligence. The main framework describes an overall working flow of an artificial intelligence system, and is applicable to a general artificial intelligence field requirement.

The following describes the above main framework of artificial intelligence from two dimensions of "intelligent information chain" (horizontal axis) and "IT value chain" (vertical axis).

The "intelligent information chain" reflects a series of processes from data obtaining to data processing. For example, the process may be a general process of intelligent information perception, intelligent information representation and formation, intelligent inference, intelligent decision-making, and intelligent execution and output. In this process, the data has experienced a condensing process of "data-information-knowledge-intelligence".

The "IT value chain" reflects the value brought by artificial intelligence to the information technology industry from the underlying infrastructure and information (providing and processing technology implementation) of artificial intelligence to the systematic industry ecology.

### (1) Infrastructure

The infrastructure provides computing power support for artificial intelligence systems, enables communication with the outside world, and realizes support through a basic platform. The infrastructure communicates with the outside through a sensor. Computing power is provided by an intelligent chip (a hardware acceleration chip like CPU, NPU, GPU, ASIC, and FPGA). The basic platform includes platform assurance and support related to the distributed computing framework and network, which can include cloud storage and computing, and interconnection and intercommunication networks. For example, the sensor communicates with the outside to obtain data, and the data is provided to the intelligent chip in the distributed computing system provided by the basic platform for computing.

### (2) Data

The data at an upper layer of the infrastructure is used to represent data source in the field of artificial intelligence. Data involves graphics, images, voice, text, and IoT data of conventional devices, including service data of existing systems and sensing data such as force, displacement, liquid level, temperature, and humidity.

### (3) Data processing

Data processing usually includes data training, machine learning, deep learning, search, inference, decision-making, and the like.

Machine learning and deep learning can perform symbolic and formal intelligent information modeling, extraction, preprocessing, training, and the like on data.

Inference refers to the process of simulating human intelligent inference mode in a computer or an intelligent system, using formal information to carry out machine thinking and solve problems based on inference control strategies. The typical functions are search and matching.

Decision-making refers to the process of making decisions after intelligent information is inferred, and usually provides functions such as classification, sorting, and prediction.

### (4) General capabilities

After the data is processed through the foregoing data processing, some general capabilities may be further formed based on a result of the data processing. For example, the general capability can be an algorithm or a general system, like translation, text analysis, computer vision processing, speech recognition, and image recognition.

### (5) Intelligent products and industry applications

Intelligent products and industry applications refer to products and applications of artificial intelligence systems in various fields, which encapsulate the overall solution of artificial intelligence and implement intelligent information decision-making into products, and achieve practical applications. The application fields mainly include: intelligent manufacturing, intelligent transportation, smart home, intelligent healthcare, intelligent security, autonomous driving, safe city, and intelligent terminals.

Scene recognition is an important branch technology in the field of computer vision. Scene recognition refers to the recognition (or "classification") of environment that can be reflected in an image or environment in which a subject (a person or an object) is located. With respect to image recognition centered on the subject (or "object"), scene recognition focuses on global information of the image. Therefore, a recognition apparatus easily uses an object irrelevant to environment as a key feature for recognizing scenes, resulting in two difficulties in scene recognition. First, there is a difference between scene images of a same scene category (that is, an inter-category difference), and the difference may be caused by a difference between objects that are irrelevant to environment. For example, an image A is a photo of Xiao Ming wearing a mask at an airport, an image B is a photo of Xiao Ming not wearing a mask at the airport, and the image A and the image B are also "airport" scenes. It is easier for the recognition apparatus to use the "face" that is in the image A and that is irrelevant to environment as a key feature of the image recognition, and obtain an incorrect classification result (for example, "hospital"). Second, scene images of different scene categories have a similarity (that is, an inter-category similarity), and the inter-category similarity may be caused by a similarity of objects that are irrelevant to environment. For example, an image C is an image in which a seat is included inside a high-speed rail, and an image D is an image in which a seat is included inside an airport. It is easier for the recognition apparatus to use the seat as the key feature for recognizing scene, perform scene recognition on the image D, and use the seat in the image D as a key feature of recognition, to obtain an incorrect classification result (for example, "high-speed rail"). The intra-category difference and the inter-category similarity reduce accuracy of scene recognition.

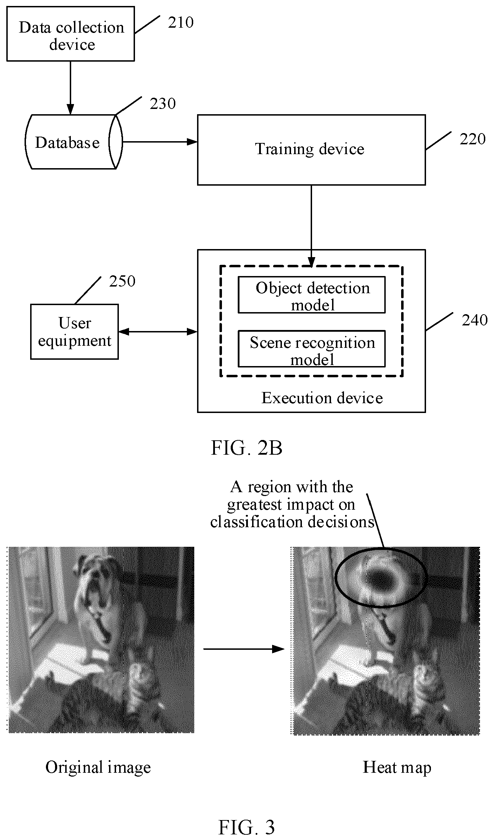

Based on the foregoing problem, an embodiment of this application provides a scene image recognition method. The method is used to reduce the intra-category difference and the inter-category similarity of scene images, thereby improving accuracy of scene recognition. Refer to FIG. 2A. An embodiment of this application provides a system architecture. A data collection device 210 is configured to collect an image, and store the collected image as training data in a database 230. A training device 220 generates an object detection model and a scene recognition model based on image data maintained in the database 230. The object detection model is used to detect a region that is "irrelevant to scene (environment) recognition" in the to-be-recognized image. The scene recognition model is used to recognize a to-be-recognized scene image. The training device 220 is implemented by one or more servers. Optionally, the training device 220 is implemented by one or more terminal devices. The execution device 240 obtains the object detection model and the scene recognition model that are from the training device 220, and loads the object detection model and the scene recognition model into the execution device 240. After obtaining the to-be-recognized scene image, the execution device 240 can recognize the to-be-recognized scene image by using the object detection model and the scene recognition model, to obtain a classification result. The execution device 240 is a terminal device. For example, the execution device 240 includes but is not limited to a mobile phone, a personal computer, a tablet computer, a wearable device (for example, a watch, a band, or a VR/AR device), a vehicle terminal, and the like. Optionally, refer to FIG. 2B. The system architecture further includes user equipment 250. The user equipment 250 includes but is not limited to a mobile phone, a personal computer, a tablet computer, a wearable device (for example, a watch, a band, or a VR/AR device), an in-vehicle terminal, and the like. An execution device 240 is implemented by one or more servers. The user equipment 250 may interact with the execution device 240 through a communication network of any communication mechanism or communication standard. The communication network may be a wide area network, a local area network, a point-to-point connection, or any combination thereof. The user equipment 250 is configured to collect a to-be-recognized scene image, and send the to-be-recognized scene image to the execution device 240. The execution device 240 receives the to-be-recognized scene image from the user equipment 250, and recognizes the to-be-recognized scene image by using the object detection model and the scene recognition model, to obtain a classification result. The execution device 240 sends the classification result to the user equipment 250. Optionally, the training device 220 and the execution device 240 may be the same device. For example, a server (or server cluster) is configured to implement both a function of the training device 220 and a function of the execution device 240.

An embodiment of this application provides a model training method. The method is applied to the training device in the foregoing system architecture. The training device obtains a first training data set, where the first training data set includes a plurality of first images, uses an object detection model to recognize an image that is of a target object and that is in the first image and that is irrelevant to scene recognition. The training device performs masking on a region in which the target object is located in the first image, to obtain a third image (i.e., only an image relevant to scene recognition is included). The training device generates, by using the image generative model, a large quantity of sample object images that are irrelevant to scene recognition, and combines the sample object images and the third image to obtain a combined target image. The training device inputs the combined target image to a first convolutional neural network for training, and inputs the third image to a second convolutional neural network for training, to obtain a scene recognition model, where the scene recognition model includes the first convolutional neural network and the second convolutional neural network. The first convolutional neural network is trained through a large quantity of newly synthesized target images, so that an object image irrelevant to scene recognition is introduced into scene images of the same category, and the scene recognition model reduces attention to an image feature that generates a difference in the target image. Thus, a negative impact of the intra-category difference of the same category of scene images on the classification performance of the scene recognition model is reduced. In addition, the second convolutional neural network is trained by using an image relevant to scene recognition, so that it is easier for the second convolutional neural network to learn a difference feature between different scene categories, thereby reducing a negative impact caused by inter-category similarity of different scene categories on classification performance of the scene recognition model. The accuracy of scene recognition is improved.

In addition, an embodiment of this application provides a scene recognition method. The method is applied to an execution device in the foregoing system architecture. The execution device collects a to-be-recognized first scene image through a camera and/or an image sensor. Then, the execution device detects, by using the object detection model obtained by the foregoing training device, a first region in the first scene image where an object irrelevant to scene recognition is located. The execution device performs masking on the first region to obtain a second scene image. The execution device inputs the first scene image and the second scene image to the training device to obtain a scene recognition model, and outputs a classification result by using the scene recognition model.

To better understand this application, words used in this application are first described.

Scene recognition refers to classifying environment that can be reflected in an image or environment in which an object (a person or an object) is located. A category of a scene image may include but is not limited to a category of "airport", a category of "high-speed rail", a category of "hospital", and a category of "office", a category of "coffee shop", and the like. Optionally, the category of the scene image may alternatively be, for example, a category of "indoor scene", a category of "outdoor scene", a category of "noisy scene", a category of "quiet scene", a category of "listening scene", or the like. The category of the scene image is configured based on a specific application scene, and is not specifically limited.

An intra-category difference of scene pictures indicates that the scene pictures of the same category are different. As a result, a picture with great intra-category difference is easily misclassified into another category. For example, an image of an office scene includes an image of a "face", and the office picture containing the "face" is misclassified to another category due to the introduction of difference information (the image of the face), that is, the office picture is misclassified to a category of non-"office".

The inter-category similarity of scene pictures indicates that different categories of scene images have similar object images. As a result, different categories of scene images are misclassified into one category. For example, both pictures inside the high-speed rail and pictures inside the airport include "chairs". Due to a similarity of the "chairs", the pictures inside the high-speed rail and the pictures inside the airport are easily classified into the same category, for example, both are classified into the category of "high-speed rail", or both are classified into the category of "airport".

A heat map (gradient-weighted class activation map, CAM) is a tool that helps visualize a convolutional neural network (convolutional neural networks, CNN), and is used to describe which local position in an image enables the CNN to make a final classification decision. The CAM includes two-dimensional feature grids related to an output category, and a location of each grid represents importance of the output category. Refer to FIG. 3. FIG. 3 is a schematic diagram of an original image and a heat map of the original image, where a degree of similarity between each grid location in an image and a classification result is presented in a form of the heat map. FIG. 3 includes a cat and a dog. The CNN classifies the image into a category of "dog". It can be learned from the heat map that the CNN recognizes a feature of a "face position of the dog", that is, the feature of the face of the dog is used as a key feature of classification. The image is classified into the category of "dog".

The following briefly describes basic principles of the heat map. An image is input to a convolutional neural network. An image feature is extracted through the convolutional neural network. Global average pooling (global average pooling, GAP) is performed on a last feature map (feature map) of a convolutional neural network model, and an average value of each channel is calculated. Then a gradient of an output of the largest category relative to the last feature map is calculated, and the gradient is visualized on the original image. Intuitively, the heat map can show which portion of high-level features extracted by the convolutional neural network has the greatest impact on the final classification decision.

Generative adversarial network (generative adversarial networks, GAN) is configured to generate sample data. In this application, the GAN is configured to generate an image of an object that is in an image and that is irrelevant to scene recognition. The GAN includes a generative model (generative model, G for short) and a discriminative model (discriminative model, D for short). The generative model is used to generate a sample similar to real training data, and an objective is to be more like the real sample, the better. The discriminative model is a binary classifier configured to estimate a probability that a sample comes from a real training sample. If the discriminative model estimates that the sample comes from the real training sample, the discriminative model outputs a large probability. If the estimated sample of the discriminative model comes from a sample generated by the generative model, the discriminative model outputs a small probability. It can be understood that the objective of the generative model is to try to generate a sample that is the same as the real sample, so that the discriminative model cannot distinguish. An objective of the discriminative model is to try to detect a sample generated by the generative model. Through the confrontation and game between G and D, a sample generated by the GAN is close to the real sample, and a large amount of sample data can be obtained.

This application includes two portions. The first portion is a model training process. The second portion is an execution (inference) process. The following first describes the model training process.
1. Model training process. The training process is executed by the training device. The model training process involves the following three models: an object detection model, an image generative model, and a scene recognition model.

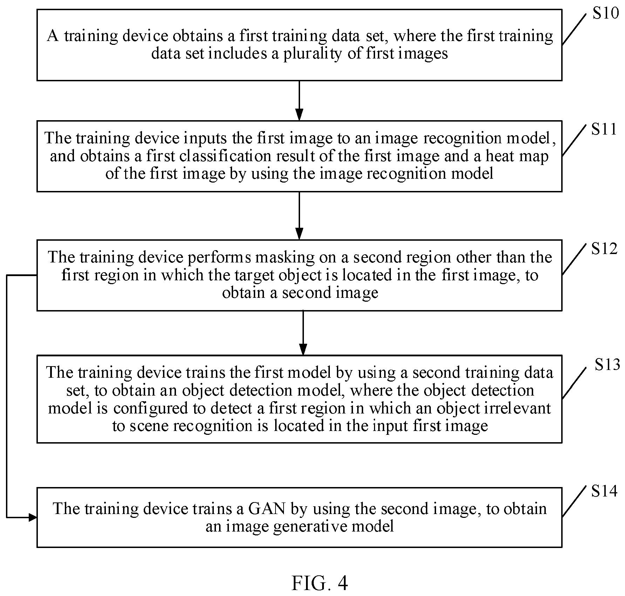

Refer to FIG. 4. A training process of the object detection model and the image generative model is first described.

S10. The training device obtains a first training data set, where the first training data set includes a plurality of first images (or referred to as "original images").

A data collection device collects images and stores the collected images in a database. The training device obtains the first training data set from the database. For example, the data collection device is a device with an image sensor, for example, a camera, a video camera, or a mobile phone. The first training data set includes a large quantity of images of different categories. For example, A1- a category of "airport", A2- a category of "high-speed rail", A3- a category of "subway", A4- a category of "office", A5- a category of "hospital", are not specifically limited. It should be understood that there are a plurality of classification manners for classifying images in the first training data set based on different requirements, and specific classification has different classifications based on different specific application scenes. It should be noted that, in this application, to distinguish an original image in the first training data set from an image on which the original image is processed, the original image is referred to as a "first image". An image on which masking is performed on an "image that is relevant to the scene recognition" in the first image is referred to as a "second image" (only an object image irrelevant to the scene recognition is retained). An image on which masking is performed on an "object image irrelevant to the scene recognition" in the first image is referred to as a "third image" (only an image relevant to the scene recognition is retained).

S11. The training device inputs the first image to an image recognition model, and obtains a first classification result of the first image and a heat map of the first image by using the image recognition model.

The heat map is used to display a region in which a target object is located, and an image feature of the target object is an image feature irrelevant to the scene recognition, and a category indicated by the first classification result is a non-scene category or an incorrect scene category. The image recognition model is a general object recognition model, which is configured to recognize a target object (or referred to as a "target object") in an image. For example, the first image is a scene image in which "a person works in an office", the first image is input to a general image recognition model, and the image recognition model outputs a first classification result of the first image as a "person". A region that has the greatest impact on which the image recognition model makes a classification decision (that is, a region in which the face is located) is obtained by using the heat map of the first image. The general image recognition model focuses more on an image feature of a subject in an image. Therefore, a category (for example, a "person") indicated by an output classification result is a non-scene category or an incorrect scene category.

An objective of the foregoing step S11 is to obtain the heat map of the first image, and a location of a target object (for example, a "face") irrelevant to the scene recognition can be determined through the heat map, so that an image including only the target object can be obtained (step S12 described below). Alternatively, an image of a remaining region after the target object is blocked in the first image may be obtained (step S22 described below).

S12. The training device performs masking on a second region other than the first region in which the target object is located in the first image, to obtain a second image (that is, an image that includes only the target object).

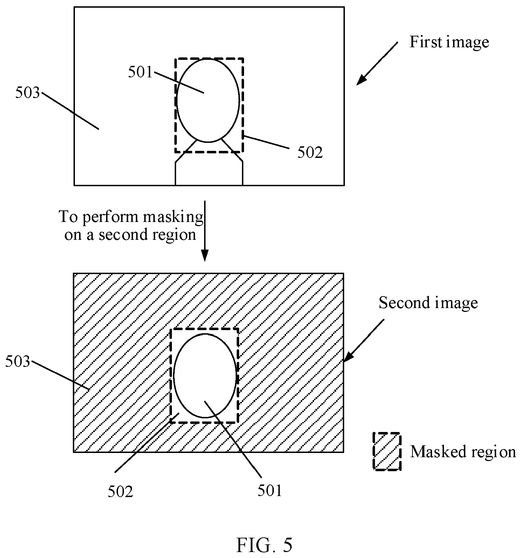

The first image is any image in the first training data set. Each image in the first training data set is processed in the foregoing step S11 and step S12, that is, a second training data set is obtained, and the second training data set includes a plurality of second images. It should be noted that, in this application, to distinguish "a region in which an object irrelevant to the scene recognition is located" and "a region that is relevant to the scene recognition" in an image, "a region in which an object irrelevant to the scene recognition is located" is referred to as a "first region", and "a region that is relevant to the scene recognition" is referred to as a second region. For example, refer to FIG. 5. A first image A is used as an example for description in FIG. 5. The first image A is an image of an office scene including a "face", and a "face" 501 is a target object irrelevant to recognition of the "office" scene. A first region 502 in which the "face" is located is a region irrelevant to the scene recognition. A region other than the first region 502 in the first image A is a second region 503. Masking is performed on the second region 503 (for example, a pixel value of the second region is set to 0), and an obtained image is a second image A.

S13. The training device trains the first model by using the second training data set, to obtain an object detection model. The object detection model is configured to detect a first region in which an object irrelevant to the scene recognition is located in the input first image. The first model may be a neural network model.

The second training data set includes a plurality of sample data, and each piece of sample data includes input data and output data. The input data is a second image, the output data is location coordinates, and the location coordinates indicate a rectangular region in which the target object is located.

The object detection model is obtained according to the foregoing step S10 to step S13.

S14. The training device trains a GAN network by using the second image, to obtain an image generative model. The training device generates, by using the image generative model, a plurality of sample object images of a same category as the target object.

A process of optimizing (or training) the GAN network by using the second image is as follows. When the generative model (G) is fixed, the discriminative model (D) is optimized. When the second image (that is, real data) is input, the D optimizes a network structure of the D to output 1. When data from the G is input, the D optimizes the network structure of the D to output 0. When the D is fixed, the G optimizes a network of the G to output samples that are the same as real data as much as possible, and enables the D to output a high probability value after the generated samples are discriminated by the D. The training process of the G and the D alternates. This confrontation process makes the images generated by the G more and more realistic, and an ability of the D to "crack down on fakes" more and more powerful.

For example, the second image A is an image of a "face", the image generative model generates a large quantity of images of the "face". The image of the "face" generated by the image generative model is not a "face" of a person in reality, but an image that is created by the image generative model based on the learning of the second image A, and has all features of a real "face". For another example, if the second image B is an image of a "chair", the image generative model generates a large quantity of images of the "chair", and the like.

The image generative model is obtained by performing the foregoing step S10 to step S12 and step S14.

The foregoing step S13 and step S14 are not limited in time sequence, and S13 and S14 may be performed synchronously, that is, an image generative model and an object detection model are obtained synchronously. Alternatively, S13 is performed before step S14, that is, an object detection model is first obtained, and then an image generative model is obtained. Alternatively, S13 is performed after step S14, that is, an image generative model is first obtained, and then an object detection model is obtained.

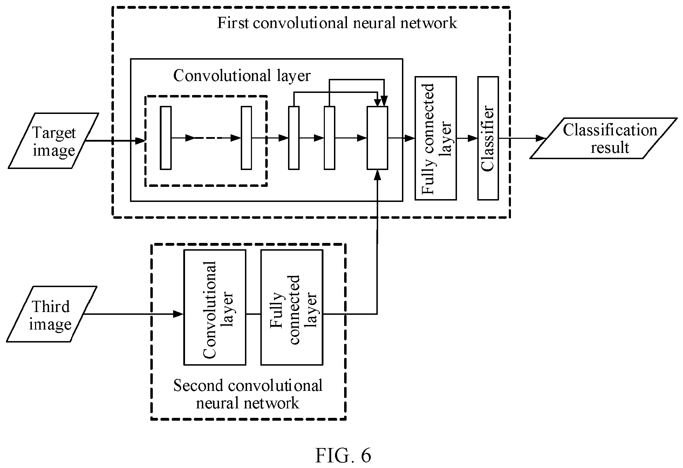

The following describes a training process of the scene recognition model. First, an architecture of the scene recognition model is described. Refer to FIG. 6. The scene recognition model includes two branch structures (or called a backbone structure and a branch structure). The two branch structures are two parallel sub-networks. To distinguish the two sub-networks, the two sub-networks are respectively referred to as a first convolutional neural network and a second convolutional neural network. The first convolutional neural network includes a plurality of first convolutional layers, first fully connected layers, and classifiers. The first convolutional layer, the first fully connected layer, and the classifier are sequentially connected. The second convolutional neural network includes a plurality of second convolutional layers and second fully connected layers. The second fully connected layer is connected to the last layer of the first convolutional layer. In embodiments of this application, to distinguish a convolutional layer and a fully connected layer in the first convolutional neural network and a convolutional layer and a fully connected layer in the second convolutional neural network, the convolutional layer in the first convolutional neural network is referred to as a "first convolutional layer", and the convolutional layer in the second convolutional neural network is referred to as a "second convolutional layer". The fully connected layer in the first convolutional neural network is referred to as a "first fully connected layer", and the fully connected layer in the second convolutional neural network is referred to as a "second fully connected layer".

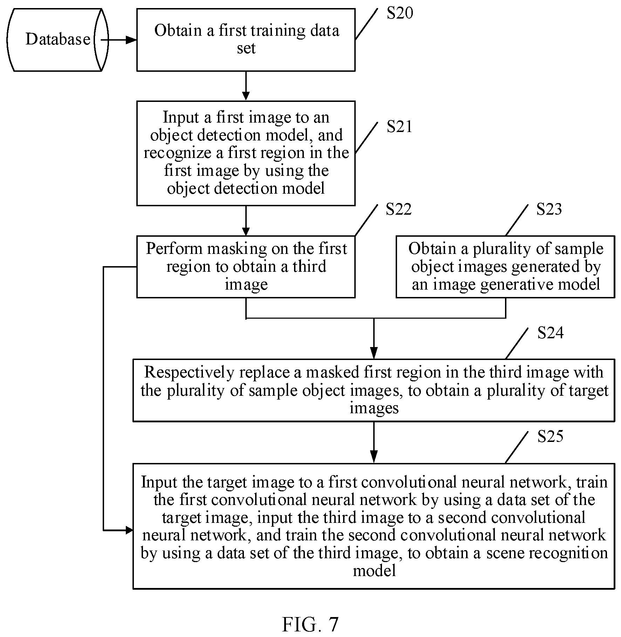

Refer to FIG. 7. A training process of the scene recognition model is shown in the following step S20 to step S25.

S20. The training device obtains a first data training set. The first training data set includes a plurality of first images (or referred to as "original images").

For this step, refer to the description of step S10 in the example corresponding to FIG. 5, and details are not described herein again.

S21. The training device inputs the first image to an object detection model, and recognizes a first region in the first image by using the object detection model. The first region is an image region irrelevant to the scene recognition. The object detection model is the object detection model obtained in step S11 to step S13 in the example corresponding to FIG. 4.

For example, a first image C is a foreground image that is a face, and a background image is a scene image of an office. The first image C is input to the object detection model, the object detection model outputs four coordinate points, the four coordinate points indicate a first region including the face, and the first region is a region irrelevant to the scene recognition.

S22. The training device performs masking on the first region to obtain a third image.

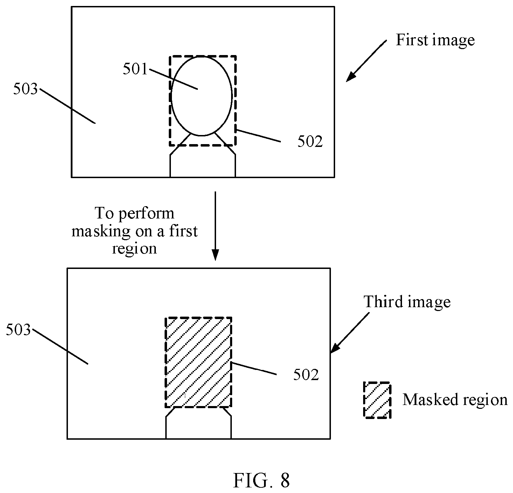

For example, refer to FIG. 8. A region that includes the face 501 in the first image C is the first region 502, a region other than the first region 502 in the first image C is the second region 503, and masking is performed on the first region 502 to obtain a third image. A function of the masking is to block the first region 502. For example, a pixel value of the first region is set to "0", so that the third image includes only an image of the second region 503, that is, the third image mainly includes an image that is relevant to the scene recognition.

S23. The training device obtains a plurality of sample object images generated by an image generative model. The sample object image is an image of an object irrelevant to the scene recognition.

The image generative model generates a large quantity of sample object images based on an object that is "irrelevant to scene recognition" in each first image in the first training set. For this step, refer to the description of S14 in the example corresponding to FIG. 4, and details are not described herein again.

S24. The training device respectively replaces a masked region in the third image with the plurality of sample object images, to obtain a plurality of target images.

It may be understood that the third image is an image that includes only a background that is relevant to the scene recognition after an object image irrelevant to the scene recognition (also referred to as an "interference image") has been blocked. For example, for one image in the scene images of the first category, where the first category is any category in a plurality of scene categories. The category of "office" is used as an example for the first category. For example, for a scene image (the first image A) in the category of "office", the training device masks a region corresponding to the interference image of the "face" in the first image A, to obtain a third image A. Then, a masked region in the third image A is replaced with a large quantity of different images of the "face" generated by the image generative model, and a plurality of target images (new images obtained by combining) are obtained by combining. A label corresponding to a plurality of combined target images are still of the category of "office". For another example, for another scene image (a first image B) of the category of "office", a third image B is obtained by blocking a region corresponding to the interference image of the "chair" in the first image B, that is, the third image B includes a masked region. The masked region in the third image B is respectively replaced with a large quantity of images of the "chair" generated by the image generative model, to obtain a plurality of target images by combination, and the label corresponding to the plurality of target images are still the "office". Optionally, the training device may alternatively replace the masked region in the third image A with the image of the "chair" generated by the image generative model with, to obtain a plurality of target images by combining. Alternatively, the training device replaces the masked region in the third image B with the image of the "face" generated by the image generative model, to obtain a plurality of target images by combining.

In this step, the third image and the sample object image generated by the image generative model are combined, so that a large quantity of new target images can be obtained. Each first image in the first training data set is processed in step S21 and step S22, and then the plurality of sample object images generated by the image generative model are combined with the third image respectively. A plurality of target images are obtained through combination. In terms of data volume, a quantity of images in the first training data set is expanded. On the other hand, in terms of a difference between images, for pictures of a same category, an image of a background that is relevant to the scene recognition is retained in the third image, and a sample object image generated by the image generative model is used as a difference image between newly synthesized scene pictures. A label corresponding to a new target image obtained through combination is still of the first category (for example, the category of office), and the target image is used as training data of the scene recognition model. A scene recognition model is trained by using a plurality of target images, and the plurality of target images have images of a same (or similar) background, thereby reducing attention (or sensitivity) of the scene recognition model on an intra-category difference of scene images of the same category. In this way, the scene recognition model pays less attention to the intra-category difference (for example, a different foreground image) of scene images of the same category, to pay more attention to an inter-category similarity (for example, a same background image) of the same scene image, thereby improving classification accuracy of the scene recognition model.

S25. The training device inputs the target image to a first convolutional neural network, trains the first convolutional neural network by using a data set of the target image, inputs the third image to a second convolutional neural network, and trains the second convolutional neural network by using a data set of the third image, to obtain a scene recognition model. The scene recognition model includes the first convolutional neural network and the second convolutional neural network.

When the scene recognition model is trained, training data for the first convolutional neural network is different from training data for the second convolutional neural network. To be specific, the training data for the first convolutional neural network is a large quantity of target images (that is, a new scene image obtained through combination), and the training data for the second convolutional neural network is the third image (that is, an image in which an object irrelevant to the scene recognition in the original image is masked).

For example, an original image A of an office scene includes a foreground image (a face) and a background image. The "face" in the original image A is an object irrelevant to the scene recognition. In this case, a region in which the "face" is located is blocked, to obtain an image B (the third image), and the image B is used as an input of the second convolutional neural network. In addition, another object image irrelevant to the scene recognition (for example, a face generated by the object generative model, or a chair) is replaced with the blocked region in the image B, then a plurality of target images (such as an image C, an image D, and an image F) can be obtained. The plurality of target images are used as input to the first convolutional neural network. Similarities between the target image and the third image are: Background images of the target images (the image C, the image D, and the image F) are the same and come from the original image A. Image information of the third image (the image B) is also from the original image A. Differences between the target image and the third image are as follows: The target images (the image C, the image D, and the image F) include both an image that is relevant to the scene recognition and an image of an object irrelevant to the scene recognition. The third image (the image B) includes only an image that is relevant to the scene recognition. To be specific, in a process of training the scene recognition model, two branch structures of the scene recognition model receive two channels of training data at the same time.

The following separately describes the two branch structures. For a first branch structure, the convolutional layer of the first convolutional neural network (also referred to as the "first convolutional layer") is configured to extract an image feature of the target image. The first convolutional neural network may be divided into convolutional feature extraction operations in a plurality of phases. For example, the convolutional feature extraction operations in the plurality of phases may be denoted as "block_1", "block_2", ..., and "block_n" in an order from left to right (from a shallow layer to a higher layer). Sizes of images corresponding to each phase are different, and sizes of image features (features) from "block_1" to "block_n" become smaller. n takes 5 as an example, and the size of block_1 is 224 × 224 × 64; the size of block_2 is 112 × 112 × 128; the size of block_3 is 56 × 56 × 256; the size of block_4 is 28 × 28 × 512; and the size of block_5 is 14 × 14 × 512. After feature maps of the first two convolutional layers (block_n-2 and block_n-1) of the last convolutional layer (block_n) are pooled (for example, pooled on average), and sizes of the two blocks are changed. Features of block_n-2 and block_n-1 are fused into an image feature of the last block_n, so that multi-size features are fused, that is, high-level features and shallow-level features are fused. In this way, the scene recognition model can pay more attention to global features. In addition, the first convolutional neural network is trained by using a large quantity of newly synthesized target images, and an object image irrelevant to the scene recognition is introduced into scene images of a same category, so that the scene recognition model pays less attention to a feature of difference image in the scene images. In this way, the adverse impact of an intra-category difference on classification performance of the scene recognition model is reduced. It should be noted that, the "feature fusion" in embodiments of this application may be implemented in a manner of concatenate (concatenate, concat for short), summation, weighted averaging, or the like on an image feature (or referred to as a feature map).

In addition, for a second branch structure, a convolutional layer of the second convolutional neural network (also referred to as a second convolutional layer) is configured to extract an image feature of the third image. The image feature of the third image passes through the fully connected layer (the second fully connected layer), and the image feature output by the second fully connected layer is fused to the last layer convolutional layer block_n of the first convolutional neural network. The fused image feature outputs a classification result (a label) through the fully connected layer (the first fully connected layer) of the first convolutional neural network and the classifier. The image feature that is of the third image and that is extracted by the second convolutional neural network is an image feature that is in the original image and that is relevant to the scene recognition, the second convolutional neural network is equivalent to an attention model, and the second convolutional neural network fuses the extracted image feature to the last convolutional layer of the first convolutional neural network. In this way, the scene recognition model focuses more on the image feature that is relevant to the scene recognition. In addition, after an object image irrelevant to the scene recognition is blocked, the second convolutional neural network is trained by using an image that is relevant to the scene recognition, so that the second convolutional neural network can learn a difference feature between different scene categories more easily. Thus, the adverse impact of the inter-category similarity on the classification performance of the scene recognition model is reduced.

Optionally, shallow features extracted by the first convolutional neural network and the second convolutional neural network are similar. To reduce a quantity of model parameters and volume of the model, the first convolutional neural network and the second convolutional neural network may reuse some convolutional layers. For example, both the first convolutional neural network and the second convolutional neural network include 20 convolutional layers, the first convolutional neural network and the second convolutional neural network may reuse the first 8 convolutional layers, and the ninth convolutional layer to the twentieth convolutional layer in the first convolutional neural network (for example, denoted as "a convolutional layer 9a to a convolutional layer 20a") and the ninth convolutional layer to the twentieth convolutional layer in the second convolutional neural network (for example, denoted as "a convolutional layer 9b to a convolutional layer 20b") are separately deployed.

2. Execution process of scene recognition. An execution entity of the execution process of the scene recognition is an execution device. For example, the execution device may be a mobile phone.

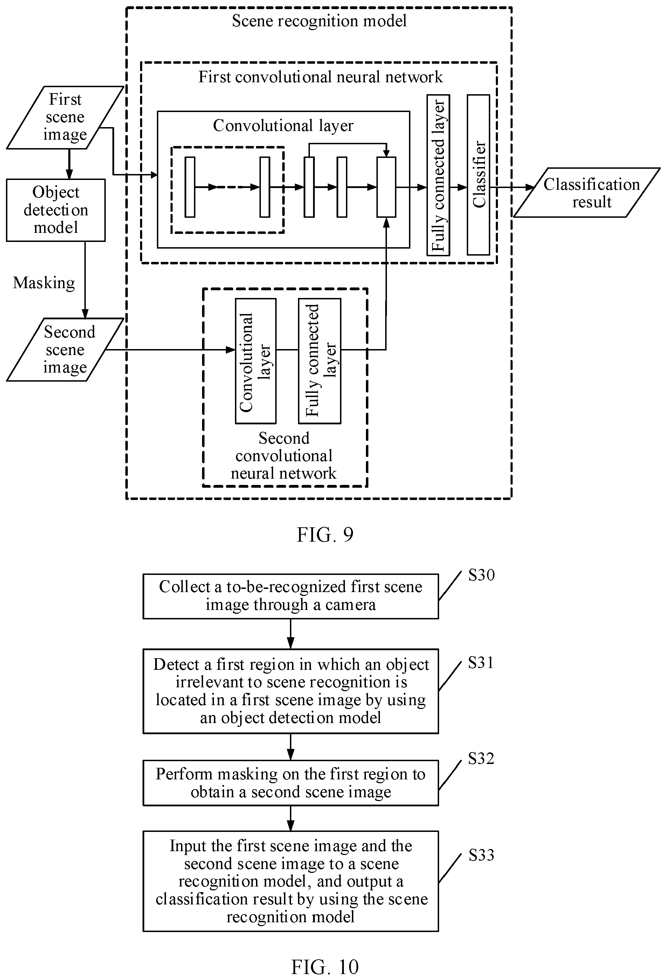

Refer to FIG. 9. FIG. 9 is an architectural diagram of an object detection model and a scene recognition model. The terminal device is loaded with the scene recognition model and the object detection model. The object detection model is configured to detect a region in which an object irrelevant to the scene recognition is located in the input image, and the scene recognition model is configured to perform scene classification on a to-be-recognized image. For an architecture of the scene recognition model, refer to the architecture description corresponding to FIG. 6. Details are not described herein again. Refer to FIG. 10. FIG. 10 is a schematic flowchart of steps of a scene recognition method.

Step S30: The execution device collects a to-be-recognized first scene image through a camera.

The camera may be actively enabled by a user. For example, the user taps an icon of the camera, and the execution device receives an operation of tapping the camera by the user, controls to enable the camera, and the camera collects a first scene image. Alternatively, the camera may be enabled by invoking an application (application, APP). For example, in a video call process of an instant messaging APP, the camera is enabled, and the camera collects a first scene image. Alternatively, the camera may be automatically started after a scene recognition requirement is generated. For example, the execution device detects a location change of the device through a sensor. A scene in which the execution device is currently located may also change, and the scene needs to be re-recognized. Therefore, the camera automatically starts, and the camera collects a first scene image. For example, the execution device is a mobile phone, and the camera may be a front-facing camera, or may be a rear-facing camera. This is not specifically limited.

Step S31: An execution device detects a first region in which an object irrelevant to scene recognition is located in a first scene image by using an object detection model.

The object detection model in this step is the object detection model obtained by training in step S11 to step S13 in the example corresponding to FIG. 4. The execution device inputs the to-be-recognized first scene image to the object detection model, where the object detection model outputs location coordinates, and the location coordinates indicate the first region. For example, the location coordinates are four pixels, the four pixels indicate a rectangular region, and an object image that is in the rectangular region (that is, the first region) is an image irrelevant to the scene recognition. For example, the first scene image is an image of an office scene, a middle region in the first scene image is an image of a "face", and the first region in which the "face" is located is detected through the object detection model.

Step S32: The execution device performs masking on the first region to obtain a second scene image.

A function of the masking is to block the first region, so that the second scene image includes only an image that is relevant to the scene recognition, but does not include an image irrelevant to the scene recognition. For example, a pixel value of the rectangular region in which the "face" is located is set to "0", and the region in which the "face" is located is blocked, to obtain the second scene image.

Step S33: The execution device inputs the first scene image and the second scene image to a scene recognition model, and outputs a classification result by using the scene recognition model.

The scene recognition model includes a first convolutional neural network and a second convolutional neural network. The first convolutional neural network is configured to receive the first scene image, and extract a first image feature of the first scene image. The second convolutional neural network is configured to receive the second scene image, extract a second image feature of the second scene image, output the second image feature to the last convolutional layer of the first convolutional neural network, and fuse the second image feature to the first image feature. The first convolutional neural network outputs a fused image feature to an output layer (including the first fully connected layer and the classifier), and outputs a classification result through the output layer.

In this embodiment of this application, the first convolutional neural network is obtained by learning the target image, and the target image is obtained by synthesizing a same background image with a different difference object image (an image of an object irrelevant to the scene recognition). In this way, a degree of attention paid by the scene recognition model to an image feature that is in the first scene image and that is irrelevant to the scene recognition is reduced, thereby reducing a negative impact of an intra-category difference between scene images of a same category on classification performance of the scene recognition model. The second convolutional neural network is obtained by learning an image that is relevant to the scene recognition, so that the scene recognition image extracts an image feature of a portion of the image that is relevant to the scene recognition, and pays more attention to an image feature that is in the first scene image and that is relevant to the scene recognition. In this way, a negative impact of an inter-category similarity of different categories of the scene images on the classification performance of the scene recognition model can be reduced. In this way, accuracy of a classification result of the to-be-recognized first scene image is greatly improved.

The scene recognition method provided in this embodiment of this application may be applied to many specific application scenes. In the first application scene, the mobile phone can adjust the noise reduction mode of the headset based on the classification result of the scene image. For details, refer to the following description of S34A. In the second application scene, the mobile phone can adjust volume based on the classification result of the scene image. Refer to the following description of S34B. The following describes an application scene to which the classification result of the first scene image can be applied.

Description of the first application scene. The noise reduction mode of the headset is briefly described first. Two or more noise reduction modes are pre-configured in the headset. For example, a first mode (or referred to as a "deep noise reduction mode"), a second mode (or referred to as a "life noise reduction mode"), and a third mode. (or a "transparent mode" or a "listening mode"). A general principle of noise reduction of the headset is as follows. The headset picks up ambient noise through a micro-mic disposed on the headset, and the headset generates an anti-noise wave to cancel external sound, so that all noise reduction or partial noise reduction is implemented before the external sound enters the user's ear. The first mode is configured to control the headset to enable deep noise reduction, so that the headset shields most noise in an ambient environment. The roar of public transportation such as airports, trains, subways and the noise of downtown environment can easily create a sense of disturbance and anxiety, and if the headset is switched to the deep noise reduction mode, the noise of the environment can be isolated effectively. The second mode is configured to control the headset to enable common noise reduction, so that the headset shields a small part of noise in the ambient environment. When the headset starts the second mode, the user can hear some sound in the external environment. This mode is applicable to living places such as restaurants, streets, and shopping malls, and can filter out some noisy noises in daily life, but can also perceive sound in the ambient environment. The third mode refers to reducing environmental noise while taking into account human voice and voice to avoid missing important work information. The foregoing three noise reduction modes are merely examples for description, and are not intended to be limited.

A method for switching a noise reduction mode by a headset in current technologies is described. When the headset is connected to a mobile phone, a user needs to set the noise reduction mode of the current headset on the setting interface of the mobile phone, for example, choose "Settings" - "General" - "Noise reduction mode" - "Deep noise reduction". For example, the user is currently on a subway, and if the user wants to adjust the noise reduction mode of the headset, the user needs to open a setting interface of the mobile phone and set the "deep noise reduction" mode, to shield all external noise. When the user goes to a supermarket, the user needs to open the setting interface again, for example, "Settings" - "Headset" - "Noise reduction mode" - "Life noise reduction", and the like, and the operation steps are complex. Alternatively, in another method for switching a noise reduction mode, after a noise reduction switch is turned on, the user presses both buttons of "volume+" and "volume-" to cyclically switch the three noise reduction modes. Press the buttons of "volume+" and "volume-" once to enter life noise reduction. Press the buttons of "volume+" and "volume-" for the second time to enter the listening mode. Press the buttons of "volume+" and "volume-" for the third time to switch to the "deep noise reduction" mode. The manner of switching the noise reduction mode of the headset through the physical buttons also requires the user to press the physical buttons for many times to switch the noise reduction mode, which is inconvenient for the user to operate.

Step S34A. The execution device adjusts the noise reduction mode of the headset based on the classification result of the first scene image.

In this embodiment of this application, the mobile phone may recognize the scene image, and automatically adjust the noise reduction mode of the headset based on the classification result obtained by the scene recognition, and the user does not need to manually set the noise reduction mode. For example, there is a correspondence between different scenes and noise reduction modes, and the mobile phone may adjust the noise reduction mode based on the scene and the correspondence between the scene and the noise reduction mode. Table 1 lists different scenes and noise reduction modes.

**Table 1**

| Noise reduction modes | Scenes |
|---|---|
| Deep noise reduction mode | Subway |
| | Airport |
| | High-speed rail |
| Life noise reduction mode | Coffee shop |
| | Supermarket |
| Listening noise reduction mode | Office |

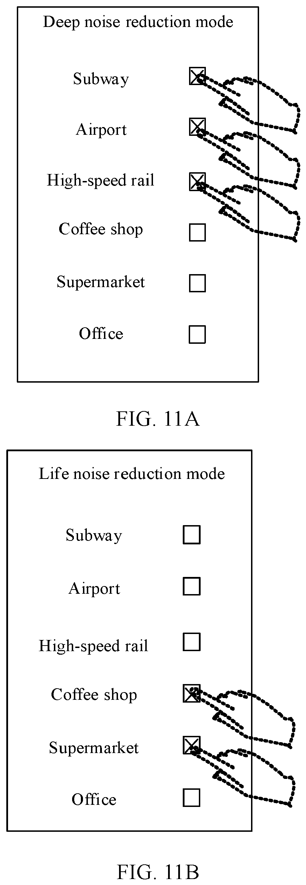

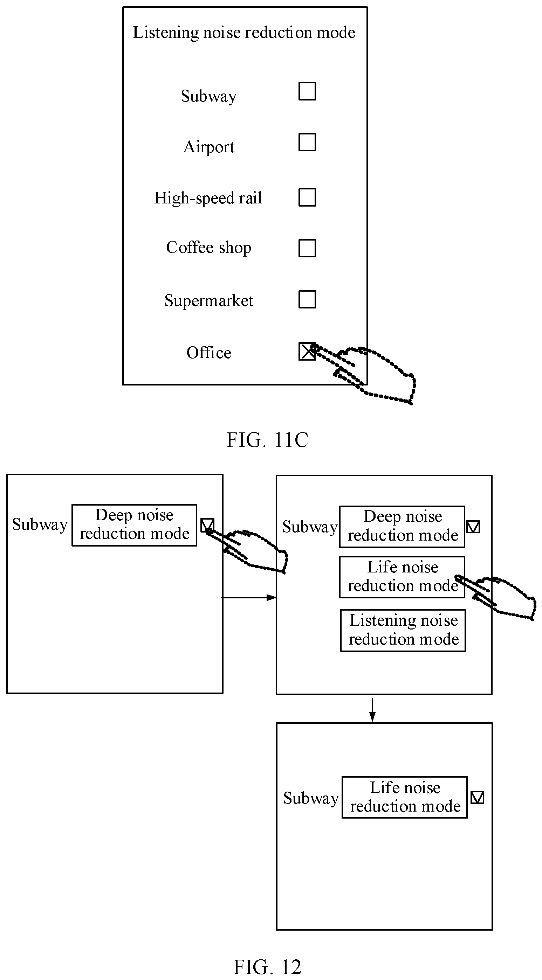

In the foregoing Table 1, correspondences between various noise reduction modes and scenes are merely examples for description, and do not constitute a limitation. The correspondence in Table 1 may be pre-configured by default. Alternatively, the user may set a correspondence between each noise reduction mode and a scene based on an actual requirement. For example, refer to FIG. 11A to FIG. 11C. The mobile phone displays a setting interface, the mobile phone receives a selection operation (for example, a tapping operation) of the user, and the mobile phone determines a correspondence between each noise reduction mode and a scene based on the selection operation of the user. For example, on the setting interface of the deep noise reduction mode, the user selects "subway", "airport", and "high-speed rail", and the mobile phone establishes a correspondence between the "subway", the "airport", and the "high-speed rail" and the deep noise reduction mode. Similarly, on the setting interface of the life noise reduction mode, the user selects "coffee shop" and "supermarket", and the mobile phone establishes a correspondence between the life noise reduction mode and the "coffee shop" and the "supermarket". On setting interface of the listening noise reduction mode, the user selects "office". The mobile phone establishes a correspondence between the listening noise reduction mode and the "office".

In another possible implementation, the mobile phone may automatically establish correspondences between various noise reduction modes and scenes based on historical setting data of the noise reduction mode by the user in different scenes, a preset rule, statistical analysis, and/or statistical learning. The mobile phone collects a scene image of environment in which the user is currently located, and recognizes the scene image by using the scene recognition model to obtain a recognition result. The recognition result indicates a first scene (or environment) in which the user is located. The mobile phone queries historical setting data, where the historical setting data includes historical data of a correspondence that is between a first scene and each headset noise reduction mode and that is set by a user. If a setting frequency of the correspondence between the first scene and the first noise reduction mode is greater than a first threshold, the mobile phone automatically establishes a correspondence between the first scene and the first noise reduction mode. For example, in the first scene, a "subway" is used as an example, and historical setting data is shown in Table 2.

**Table 2**

| Scenes | Noise reduction modes | Number of times |
|---|---|---|
| Subway | Deep noise reduction mode | 8 |
| | Life noise reduction mode | 2 |
| | Listening noise reduction mode | 0 |

It can be learned from the foregoing Table 2 that in the historical setting data, in the subway scene, a frequency (80%) of setting the "deep noise reduction mode" by the user is greater than the first threshold (for example, the first threshold is 70%), and a frequency (20%) of setting the "life noise reduction mode" by the user is less than the first threshold. The mobile phone establishes a correspondence between the "subway" and the "deep noise reduction mode". In this implementation, personalized adjustment of the noise reduction mode can be implemented without manual setting by the user. Optionally, the user can also manually modify the correspondence automatically established by the mobile phone for personalized configuration. The correspondence between the first scene and the first noise reduction mode is modified to a correspondence between the first scene and the second noise reduction mode. For example, refer to FIG. 12. The mobile phone displays a setting interface, and the setting interface displays a correspondence between the "subway" and the "deep noise reduction mode", the "deep noise reduction mode" is associated with a selection key, and the mobile phone responds to an operation performed by the user on the selection key. The correspondence between the "subway" and the "deep noise reduction mode" is modified to a correspondence between the "subway" and the "life noise reduction mode". In this implementation, the mobile phone may receive the selection operation of the user, modify the correspondence between the scene and the noise reduction mode that is automatically established by the mobile phone, and perform the personalized configuration, so that the user can configure the correspondence between the scene and the noise reduction mode based on environment in which the user is located and an actual requirement, thereby improving user experience.

In an application scene of this embodiment of this application, the user is currently in the subway environment, and listens to music by using the headset. The user may turn on a camera of a mobile phone, or the camera of the mobile phone automatically starts. Then, the mobile phone collects a scene photo inside the subway through the camera, and the mobile phone may collect an image through a front camera of the mobile phone. Alternatively, an image may be collected through a rear camera of the mobile phone. This is not specifically limited. For example, the mobile phone collects the scene image through the front-facing camera. Although the scene image includes an image of the "face" of the user, a classification result of the scene image can be accurately recognized as the first scene (for example, the "subway" scene) by using the scene recognition method in this embodiment. The mobile phone switches the noise reduction model of the headset to the first noise reduction mode (for example, the deep noise reduction mode) based on the first scene and the correspondence between the first scene and the first noise reduction mode (for example, the deep noise reduction mode). In this embodiment of this application, the mobile phone may perform the scene recognition on the collected scene image, and automatically adjust the noise reduction mode of the headset based on the classification result of the scene recognition. The user does not need to adjust the noise reduction mode based on operation steps, which facilitates implementation.

For another example, in another application scene, if the user is currently using a video call function of the instant messaging APP, the instant messaging APP has invoked a camera, and the camera collects a scene image in which the user is located in real time. To reduce a calculation amount of the mobile phone, the mobile phone may obtain a frame of the scene image at intervals of a time period, and then perform the scene recognition on the scene image. For example, duration of the time period may be 10 minutes, 15 minutes, 20 minutes, or the like. The duration of the time period is set based on the approximate duration required for the user to move from one environment to another environment. Generally, the user does not change environment in which the user is located frequently in a short period of time. For example, the user goes from the "subway" to the "office". Alternatively, the user goes from the "office" to the "supermarket", which requires a time interval. For example, the time period is 10 minutes. When the user uses the mobile phone to make a video call with the other party, the camera of the mobile phone of the user collects a scene image every 10 minutes. For example, a scene image A is collected at 10:20:01 on 3/7/2021, and the mobile phone recognizes that the classification result of the scene image A is the "subway". Then, the mobile phone adjusts the noise reduction mode of the mobile phone to the "deep noise reduction mode" based on the classification result, and the headset executes the deep noise reduction mode. The user can barely hear the noise outside, and can hear only the voice content of the other party in the video call. The user exits the subway at 10:25:00 on 3/7/2021, and the mobile phone collects a scene image B at 10:30:01 on 3/7/2021, and the mobile phone recognizes that the classification result of the scene image B is the "office". The mobile phone adjusts the noise reduction mode of the mobile phone to the listening noise reduction mode based on the classification result. When the headset is switched to the listening noise reduction mode, the headset shields noises in environment, and the user cannot hear the noises in environment. However, the user can still hear the greeting voices of colleagues in the office environment and the voices of colleagues talking about communication problems. In addition, the user can hear voice content of the other party in the video call. In this embodiment of this application, the mobile phone automatically adjusts the headset noise reduction mode based on the classification result of the scene recognition, and the user does not need to manually adjust the headset noise reduction mode step by step, thereby improving user experience.

Description of the second application scene. System sound includes sound of headsets, ring tone, calls, and media. Environment in which the user is located is different, and system volume requirements of the mobile phone are different. For example, in a noisy environment (like a subway or a supermarket), the user needs to increase the system volume. For example, the user needs to increase volume of the ring tone and a prompt tone to avoid missing a call or a message, and needs to increase volume of the call to clearly hear a voice of the other party. When the user is in a quiet environment (like an office or a library), the user does not want volume of system sound of the mobile phone to be excessively loud. For example, if the volume of the ring tone and the prompt tone is excessively high, other people may be affected. In addition, if the volume of the call is excessively large, privacy may be disclosed. In this relatively quiet environment, the user will reduce the volume of the system sound. In this way, the user may need to repeatedly adjust the volume of the system sound in different environments. Generally, to facilitate adjustment of the volume of the system sound, the user directly adjusts the ring tone and the prompt tone of the mobile phone to mute in a quiet environment. Although this operation of the user can avoid disturbing others, the ring tone of the mobile phone is directly adjusted to mute, which also prevents users from receiving and replying to users' calls and messages in time.

Step S34B. The execution device adjusts the system volume of the execution device based on the classification result of the first scene image.

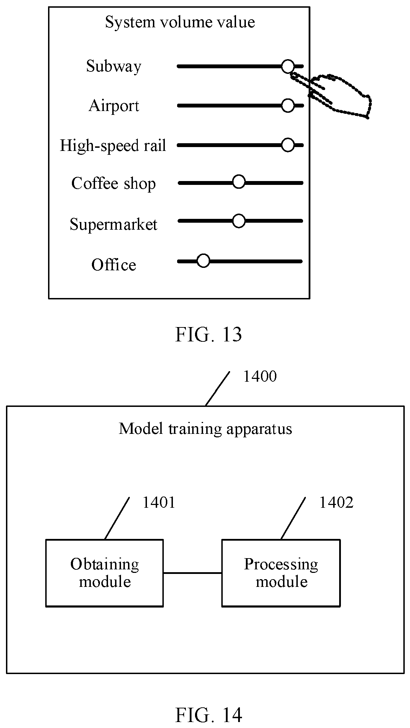

In this embodiment of this application, the mobile phone collects the scene image. The mobile phone can adaptively adjust the system volume value based on the classification result of the scene image. The user does not need to frequently adjust the system volume value of the mobile phone based on different environments. For example, refer to FIG. 13. The mobile phone displays a setting interface of the system volume value. The setting interface displays a progress bar corresponding to each scene and used to adjust a volume value. The user may set the volume value corresponding to each scene by sliding the progress bar. Alternatively, in another implementation, the user does not need to set volume values corresponding to different scenes, and the mobile phone configures, by default, correspondences between different scenes and system volume values based on empirical values. The following Table 3 lists correspondences between different scenes and system volume values. A specific scene and a volume value corresponding to each scene shown in Table 3 are merely examples for description, but are not intended to be limited.

**Table 3**

| Scenes | System volume values |
|---|---|
| Subway | 90 |
| Airport | 90 |
| High-speed rail | 80 |
| Coffee shop | 50 |
| Supermarket | 50 |
| Office | 20 |

In an application scene, the user is in a coffee shop environment, the user starts the camera of the mobile phone, or the camera of the mobile phone automatically starts, the mobile phone obtains a scene image C collected by the camera, and the mobile phone performs the scene recognition on the scene image C to obtain a classification result C (a scene of the coffee shop). The mobile phone adjusts the volume value of the system volume based on the classification result C. For example, the mobile phone adjusts the system sound to 50 based on the scene of the "coffee shop". When there is an incoming call, a volume value of the ring tone is set to 50. Smaller volume does not disturb others and enables the user to hear the ringtone (or the prompt tone), so that the user does not miss the call. After a user enters a subway from a coffee shop, the user is in a subway environment. The user starts the camera of the mobile phone, or the camera of the mobile phone automatically starts. The mobile phone collects a scene image D through the camera. The mobile phone recognizes environment in which the user is located based on the scene image D, and obtains a classification result D (a scene of the subway). The mobile phone adjusts the system volume value to 90 based on the classification result D (the scene of the subway), so that the user can still hear the system sound of the mobile phone in the subway.

For another example, in another application scene, if the user is currently using a video call function of the instant messaging APP, the instant messaging APP has invoked a camera, and the camera collects a scene image in which the user is located in real time. To reduce a calculation amount of the mobile phone, the mobile phone may obtain a frame of the scene image at intervals of a time period, and then perform the scene recognition on the scene image. For example, duration of the time period may be 10 minutes, 15 minutes, 20 minutes, or the like. The duration of the time period is set based on the approximate duration required for the user to move from one environment to another environment. When the user uses the mobile phone to make a video call with the other party, the camera of the mobile phone of the user collects a scene image every 10 minutes. For example, the scene image C is collected at 10:20:01 on 3/8/2021, and the mobile phone recognizes that the classification result of the scene image C is the "subway". Then, the mobile phone adjusts the volume value of the headset to 90 based on the classification result, and the volume in the headset increases. The user can clearly hear the sound in the headset. The user exits the subway at 10:25:00 on 3/8/2021 and the mobile phone collects a scene image D at 10:30:01 on 3/8/2021. The mobile phone recognizes that the classification result of the scene image D is the "office", and the mobile phone adjusts the volume value of the headset to 50 based on the classification result. When the volume of the headset is reduced, the user can hear voice content of the other party, and the volume of the headset is moderate, which does not cause ear discomfort of the user, and does not leak voice information in the headset.

In this embodiment of this application, the mobile phone collects, through the camera, a scene image of environment in which the user is located, recognizes the scene image, and adaptively adjusts the system volume value based on a classification result of the scene image, that is, environment in which the user is located. The user does not need to repeatedly manually adjust the system volume based on different environments, and user experience is improved.

It should be understood that, in the architecture corresponding to FIG. 2B, the user equipment (for example, a mobile phone) receives a classification result of the to-be-recognized first scene image from the execution device, where the classification result is used to trigger the user equipment to adjust the noise reduction mode of the headset to the first noise reduction mode. There is a correspondence between the scene indicated by the classification result and the first noise reduction mode. To be specific, for a detailed description that the user equipment adjusts the noise reduction mode of the headset based on the classification result of the first scene image, refer to the detailed description of step S34A. Details are not described herein again.

Optionally, the user equipment (for example, a mobile phone) receives a classification result of the to-be-recognized first scene image from the execution device, where the classification result is used to trigger the user equipment to adjust system volume of the user equipment to the first volume value. There is a correspondence between the scene indicated by the classification result and the first volume value. To be specific, for a description that the user equipment adjusts the system volume value of the user equipment based on the classification result of the first scene image, refer to the detailed description of step S34B. Details are not described herein again.

Compared with the foregoing method embodiments, this application further provides an apparatus to which the model training method is applied. The model training method is applied to a model training apparatus. The model training apparatus may be the training device in the foregoing method embodiment, or the model training apparatus may be a processor in the training device, or the model training apparatus may be a chip system in the training device. Refer to FIG. 14. This application provides an embodiment of a model training apparatus 1400. The model training apparatus includes an obtaining module 1401 and a processing module 1402.

The obtaining module 1401 is configured to obtain a first training data set, where the first training data set includes a plurality of first images.

The processing module 1402 is configured to: recognize a first region in the first image by using an object detection model, where the first region is an image region irrelevant to scene recognition; perform masking on the first region to obtain a third image; obtain a plurality of sample object images generated by an image generative model, where the sample object image is an image of an object irrelevant to the scene recognition; respectively replace a masked first region in the third image with the plurality of sample object images, to obtain a plurality of target images; and train a first convolutional neural network by using a data set of the target image, and training a second convolutional neural network by using a data set of the third image, to obtain a scene recognition model, where the scene recognition model includes the first convolutional neural network and the second convolutional neural network.

Optionally, the obtaining module 1401 is replaced by a transceiver module. Optionally, the transceiver module is a transceiver. The transceiver has a sending and/or receiving function. Optionally, the transceiver is replaced by a receiver and/or a transmitter.

Optionally, the transceiver module is a communication interface. Optionally, the communication interface is an input/output interface or a transceiver circuit. The input/output interface includes an input interface and an output interface. The transceiver circuit includes an input interface circuit and an output interface circuit.

Optionally, the processing module 1402 is a processor, and the processor is a general-purpose processor, a dedicated processor, or the like. Optionally, the processor includes a transceiver unit configured to implement a receiving function and a sending function. For example, the transceiver unit is a transceiver circuit, an interface, or an interface circuit. The transceiver circuit, the interface, or the interface circuit for implementing the receiving function and the sending function are deployed separately, optionally are integrated and deployed together. The transceiver circuit, the interface, or the interface circuit is configured to read or write code or data, or the transceiver circuit, the interface, or the interface circuit is configured to transmit or transfer a signal.

Further, the obtaining module 1401 is configured to perform step S10 in the example corresponding to FIG. 4 and step S20 in the example corresponding to FIG. 7. The processing module 1402 is configured to perform step S11 to step S14 in the example corresponding to FIG. 4, and step S20 to step S25 in the example corresponding to FIG. 7.

Specifically, in a possible implementation, the processing module 1402 is further specifically configured to:
input the first image to an image recognition model, and obtain a first classification result of the first image and a heat map of the first image by using the image recognition model, where the heat map is used to display a region in which a target object is located, an image feature of the target object is an image feature irrelevant to the scene recognition, and a category indicated by the first classification result is a non-scene category or an incorrect scene category;
perform masking on a second region other than the first region in which the target object is located in the first image, to obtain a second image; and
train a first model by using a second training data set, to obtain the object detection model, where the second training data set includes a plurality of sample data, the sample data includes input data and output data, the input data is the second image, the output data is location coordinates, and the location coordinates indicate a region in which the target object is located.

In a possible implementation, the processing module 1402 is further configured to train a generative adversarial network GAN by using the second image, to obtain the image generative model.

In a possible implementation, the processing module 1402 is further specifically configured to:
extract an image feature of the target image through a first convolutional layer of the first convolutional neural network, extract an image feature of the third image through a second convolutional layer of the second convolutional neural network, and output the image feature of the third image to the first convolutional layer, to fuse with the image feature of the target image; and
output, through an output layer of the first convolutional neural network, the label of the first category based on a fused image feature.

In a possible design, functions of the processing module 1402 are implemented by a processing apparatus, and some or all functions of the processing apparatus are implemented by software, hardware, or a combination thereof. Therefore, it may be understood that the foregoing modules may be implemented by software, hardware, or a combination thereof. In this case, the processing apparatus includes a memory and a processor. The memory is configured to store a computer program, and the processor reads and executes the computer program stored in the memory, to perform corresponding processing and/or steps in the foregoing method embodiments. The processor includes but is not limited to one or more of a CPU, a DSP, an image signal processor, a neural network processing unit (neural network processing unit, NPU), and a microcontroller.

Optionally, the processing apparatus includes only the processor. The memory configured to store the computer program is located outside the processing apparatus, and the processor is connected to the memory through a circuit/wire, to read and execute the computer program stored in the memory. Optionally, some or all of the functions of the processing apparatus are implemented by hardware. In this case, the processing apparatus includes an input interface circuit, a logic circuit, and an output interface circuit. Optionally, the processing apparatus may be one or more chips, or one or more integrated circuits.

Optionally, the object detection model, the image generative model, and the scene recognition model may be neural network models, and may be embedded, integrated in, or run in a neural network processor (NPU).

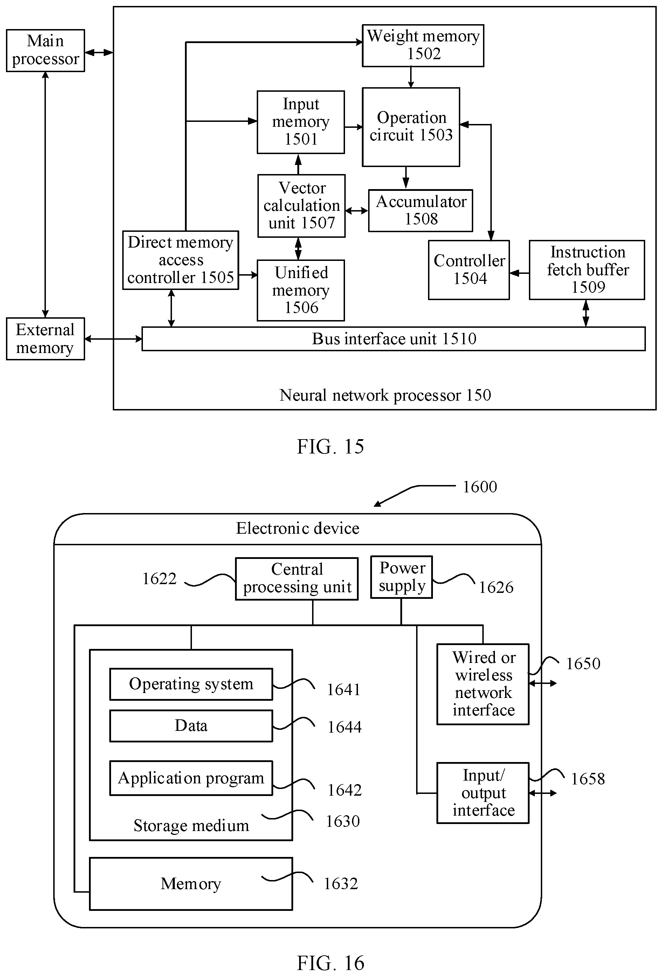

Refer to FIG. 15. A neural network processor 150 is briefly described for ease of understanding. The neural network processor 150 is mounted to a main processor as a co-processor. For example, the main processor may include a CPU, and the main processor is configured to allocate a task. A core part of the neural network processor is an operation circuit 1503, and the controller 1504 controls the operation circuit 1503 to extract matrix data from the memory and perform a multiplication operation. In some implementations, the operation circuit 1503 includes a plurality of processing engines (processing engines, PEs). In some implementations, the operation circuit 1503 is a two-dimensional systolic array. The operation circuit 1503 may also be a one-dimensional systolic array or other electronic circuit capable of performing mathematical operations such as multiplication and addition. In some implementations, the operation circuit 1503 is a general-purpose matrix processor.

For example, it is assumed that there is an input matrix A, a weight matrix B, and an output matrix C. The operation circuit obtains data corresponding to the matrix B from a weight memory 1502, and buffers the data on each PE in the operation circuit. The operation circuit obtains data of the matrix A from an input memory 1501 and performs a matrix operation on the matrix B, and stores a partial result or a final result of the obtained matrix in an accumulator (accumulator) 1508.

A unified memory 1506 is configured to store input data and output data. Weight data is directly transferred to the weight memory 1502 through a direct memory access controller (direct memory access controller, DMAC) 1505. The input data is also transferred to the unified memory 1506 through the DMAC.

Abus interface unit (bus interface unit, BIU) 1510 is configured to interact between the AXI bus and the DMAC and the instruction fetch buffer (instruction fetch buffer) 1509.

The bus interface unit 1510 is configured to obtain instructions from the external memory by the instruction fetch buffer 1509, and is further configured to obtain original data of the input matrix A or the weight matrix B by the direct memory access controller 1505 from the external memory.

The DMAC is mainly configured to transfer input data in the external memory DDR to the unified memory 1506, or transfer the weight data to the weight memory 1502, or transfer the input data to the input memory 1501.

A vector calculation unit 1507 has a plurality of operation processing units, and if necessary, performs vector multiplication, vector addition, exponential operation, logarithmic operation, size comparison, and the like as further processing on the output of the operation circuit. The vector calculation unit is mainly configured for non-convolutional/FC layer network computing of neural networks, such as pooling (pooling), batch normalization (batch normalization), and local response normalization (local response normalization).

In some implementations, the vector calculation unit 1507 can store the processed output vector to the unified memory 1506. For example, the vector calculation unit 1507 may apply a non-linear function to an output of the operation circuit 1503, like accumulating vectors of values, to generate an activation value. In some implementations, the vector calculation unit 1507 generates a normalized value, a merged value, or both. In some implementations, the vector of the processed output can be used as an activation input to the operation circuit 1503, for example for use in subsequent layers in the neural network. An instruction fetch buffer (instruction fetch buffer) 1509 connected to the controller 1504 is configured to store instructions used by the controller 1504. The unified memory 1506, the input memory 1501, the weight memory 1502, and the instruction fetch buffer 1509 are all On-Chip memories. The external memory is private to the NPU hardware architecture.

Refer to FIG. 16. This application provides an electronic device 1600. The electronic device 1600 is the training device in the foregoing method embodiment, and is configured to perform a function of the training device in the foregoing method embodiment. In this embodiment, the electronic device 1600 is described by using a server as an example.

The server includes one or more central processing units (central processing units, CPUs) 1622 (for example, one or more processors) and a memory 1632. One or more storage media 1630 (e.g., one or more mass storage devices) storing an application program 1642 or data 1644. The memory 1632 and the storage medium 1630 are temporary storage or persistent storage. A program stored in the storage medium 1630 includes one or more modules (not shown in the figure), and each module includes a series of instruction operations in the apparatus. Further, the central processing unit 1622 is configured to communicate with the storage medium 1630, and execute a series of instruction operations in the storage medium 1630 on the server.

Optionally, the server further includes one or more power supplies 1626, one or more wired or wireless network interfaces 1650, one or more input/output interfaces 1658, and/or one or more operating systems 1641.

Optionally, the server further includes one or more power supplies 1626, one or more wired or wireless network interfaces 1650, one or more input/output interfaces 1658, and/or one or more operating systems 1641.

Optionally, the central processing unit 1622 includes the NPU shown in FIG. 15.

In addition, in an optional design, functions of the obtaining module 1401 in FIG. 14 is performed by the network interface 1650 in FIG. 16. Functions of the processing module 1402 in FIG. 14 are performed by the central processing unit 1622 in FIG. 16.

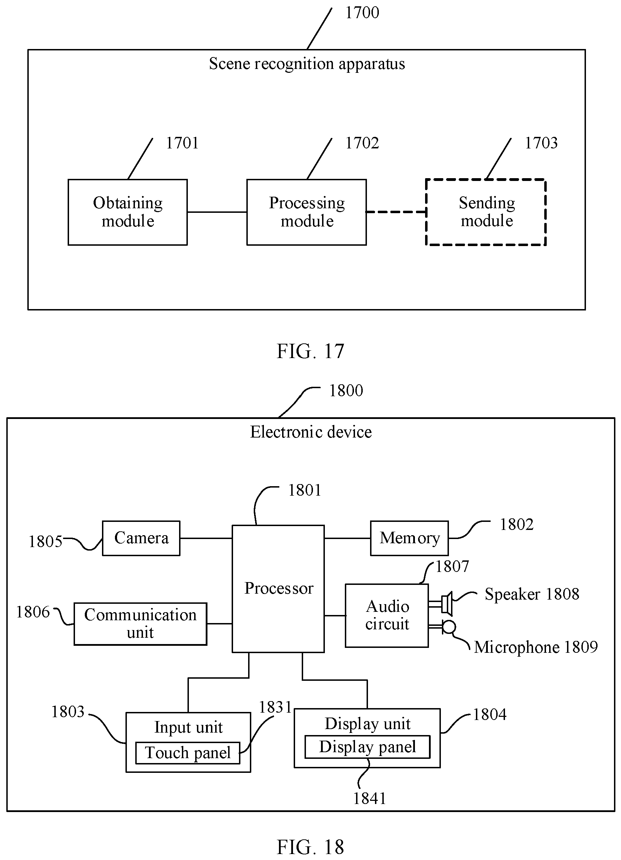

This application further provides a scene recognition apparatus to which the scene recognition method is applied. The scene recognition apparatus is configured to perform a function performed by the execution device in the foregoing method embodiment. The scene recognition apparatus may be the execution device in the foregoing method embodiment, or the scene recognition apparatus may be a processor in the execution device, or the scene recognition apparatus may be a chip system in the execution device. Refer to FIG. 17. This application provides an embodiment of a scene recognition apparatus 1700. The scene recognition apparatus 1700 includes an obtaining module 1701 and a processing module 1702. Optionally, the scene recognition apparatus further includes a sending module 1703.

The obtaining module 1701 is configured to obtain a to-be-recognized first scene image.

The processing module 1702 is configured to: detect, by using an object detection model, a first region in which an object irrelevant to scene recognition is located in the first scene image; perform masking on the first region to obtain a second scene image; and input the first scene image to a first convolutional neural network in a scene recognition model, input the second scene image to a second convolutional neural network in the scene recognition model, and output a classification result by using the scene recognition model. The first convolutional neural network is obtained by training by using a data set of the target image. The second convolutional neural network is obtained by training by using a data set of the third image. The target image is obtained by respectively replacing a first region in the third image with a plurality of sample object images generated by an image generative model. The third image is obtained by recognizing a first region that is in the first image and that is irrelevant to scene recognition by using the object detection model, and then performing masking on the first region. The first image is an image in a training data set.

Optionally, the object detection model, the image generative model, and the scene recognition model may be neural network models, and may be embedded in, integrated in, or run in the foregoing neural network processor (NPU) shown in FIG. 15.

Optionally, the obtaining module 1701 is replaced by a transceiver module. Optionally, the transceiver module is a transceiver. The transceiver has a sending and/or receiving function. Optionally, the transceiver is replaced by a receiver and/or a transmitter.

Optionally, the transceiver module is a communication interface. Optionally, the communication interface is an input/output interface or a transceiver circuit. The input/output interface includes an input interface and an output interface. The transceiver circuit includes an input interface circuit and an output interface circuit.

Optionally, the processing module 1702 is a processor, and the processor is a general-purpose processor, a dedicated processor, or the like. Optionally, the processor includes a transceiver unit configured to implement a receiving function and a sending function. For example, the transceiver unit is a transceiver circuit, an interface, or an interface circuit. The transceiver circuit, the interface, or the interface circuit for implementing the receiving function and the sending function are deployed separately, optionally are integrated and deployed together. The transceiver circuit, the interface, or the interface circuit is configured to read or write code or data, or the transceiver circuit, the interface, or the interface circuit is configured to transmit or transfer a signal.

In a possible design, functions of the processing module 1702 are implemented by a processing apparatus, and some or all functions of the processing apparatus are implemented by software, hardware, or a combination thereof. Therefore, it may be understood that the foregoing modules may be implemented by software, hardware, or a combination thereof. In this case, the processing apparatus includes a memory and a processor. The memory is configured to store a computer program, and the processor reads and executes the computer program stored in the memory, to perform corresponding processing and/or steps in the foregoing method embodiments. The processor includes but is not limited to one or more of a CPU, a DSP, an image signal processor, a neural network processing unit (neural network processing unit, NPU), and a microcontroller.

Optionally, the processing apparatus includes only the processor. The memory configured to store the computer program is located outside the processing apparatus, and the processor is connected to the memory through a circuit/wire, to read and execute the computer program stored in the memory. Optionally, some or all of the functions of the processing apparatus are implemented by hardware. In this case, the processing apparatus includes an input interface circuit, a logic circuit, and an output interface circuit. Optionally, the processing apparatus may be one or more chips, or one or more integrated circuits.

Further, the obtaining module 1701 is configured to perform step S30 in the example corresponding to FIG. 10 in the foregoing method embodiment. The processing module 1702 is configured to perform step S31 to step S33 in the example corresponding to FIG. 10 in the foregoing method embodiment. Optionally, when the execution device is the terminal device, the processing module 1702 is further configured to perform step S34A and step S34B.

Specifically, in an optional implementation, the processing module 1702 is further configured to: extract an image feature of the first scene image through a first convolutional layer of the first convolutional neural network, extract an image feature of the second scene image through a second convolutional layer of the second convolutional neural network, and output the image feature of the second scene image to the first convolutional layer, to fuse with the image feature of the first scene image; and output, through an output layer of the first convolutional neural network, the classification result based on a fused image feature.

Specifically, in an optional implementation, if the classification result indicates a first scene, there is a correspondence between the first scene and a first noise reduction mode of a headset.

The processing module 1702 is further configured to adjust a noise reduction mode of the headset to the first noise reduction mode based on the classification result.

Alternatively,
a sending module 1703 is configured to send the classification result to user equipment, where the classification result is used to trigger the user equipment to adjust the noise reduction mode of the headset to the first noise reduction mode.

In an optional implementation, if the classification result indicates a first scene, there is a correspondence between the first scene and a first volume value.

The processing module 1702 is further configured to adjust system volume of the execution device to the first volume value based on the classification result.

Alternatively,
a sending module 1703 is configured to send the classification result to user equipment, where the classification result is used to trigger the user equipment to adjust system volume of the user equipment to the first volume value.

Optionally, the sending module 1703 is replaced by a transceiver module. Optionally, the transceiver module is a transceiver. The transceiver has a sending and/or receiving function. Optionally, the transceiver is replaced by a receiver and/or a transmitter.

Optionally, the transceiver module is a communication interface. Optionally, the communication interface is an input/output interface or a transceiver circuit. The input/output interface includes an input interface and an output interface. The transceiver circuit includes an input interface circuit and an output interface circuit.

In an optional implementation, the obtaining module 1701 is further configured to receive a to-be-recognized first scene image sent by the user equipment; or collect the to-be-recognized first scene image through a camera or an image sensor.

Refer to FIG. 18. An embodiment of this application further provides another electronic device. The electronic device 1800 is configured to perform functions performed by the execution device in the foregoing method embodiment. In this embodiment of this application, the electronic device is described by using a mobile phone as an example. The electronic device 1800 includes components such as a processor 1801, a memory 1802, an input unit 1803, a display unit 1804, a camera 1805, a communication unit 1806, and an audio circuit 1807. The memory 1802 may be configured to store a software program and a module. The processor 1801 executes various function applications of the apparatus and data processing by running a software program and a module that are stored in the memory 1802. The memory 1802 may include a high-speed random access memory, and may further include a nonvolatile memory, for example, at least one magnetic disk storage device, a flash memory device, or another volatile solid-state storage device. The processor 1801 may be the processing apparatus mentioned in the embodiment corresponding to FIG. 17. Optionally, the processor 1801 includes but is not limited to various types of processors, such as one or more of a previously mentioned CPU, a DSP, an image signal processor, a neural network processor shown in FIG. 15, and a microcontroller.

The input unit 1803 may be configured to receive input digital or character information, and generate key signal input related to user setting and function control of the apparatus. Specifically, the input unit 1803 may include a touch panel 1831. The touch panel 1831, also referred to as a touchscreen, may collect a touch operation performed by a user on or near the touch panel 1831 (for example, an operation performed by the user on or near the touch panel 1831 by using any suitable object or accessory like a finger or a stylus).

The display unit 1804 may be configured to display various image information. The display unit 1804 may include a display panel 1841. Optionally, the display panel 1841 may be configured in a form of a liquid crystal display, an organic light emitting diode, or the like. In some embodiments, the touch panel 1831 and the display panel 1841 may be integrated to implement an input function and an output function of the apparatus.

The camera 1805 is configured to collect a to-be-recognized scene image, or is configured to collect a scene image, and send the collected scene image to a database.

The communication unit 1806 is configured to establish a communication channel, so that the electronic device is connected to a remote server through the communication channel, and obtain an object detection model and a scene recognition model from the remote server. The communication unit 1806 may include a communication module like a wireless local area network module, a Bluetooth module, and a baseband module, and a radio frequency (radio frequency, RF) circuit corresponding to the communication module, and is configured to perform wireless local area network communication, Bluetooth communication, infrared communication, and/or cellular communication system communication. The communication module is configured to control communication of components in the electronic device, and may support direct memory access.

Optionally, various communication modules in the communication unit 1806 generally appear in a form of an integrated circuit chip, and may be selectively combined without including all communication modules and corresponding antenna groups. For example, the communication unit 1806 may include only a baseband chip, a radio frequency chip, and a corresponding antenna to provide a communication function in a cellular communication system. The electronic device may be connected to a cellular network or the Internet through a wireless communication connection established by the communication unit 1806.

The audio circuit 1807, a speaker 1808, and a microphone 1809 may provide an audio interface between a user and a mobile phone. The audio circuit 1807 may transmit an electrical signal obtained by converting the received audio data to the speaker 1808, and the speaker 1808 converts the electrical signal into a sound signal for outputting. The microphone 1809 converts the collected sound signal into an electric signal, the audio circuit 1807 receives the electric signal and converts the electric signal into audio data, then outputs the audio data to the processor 1801 for processing, and sends the audio data to another mobile phone through the communication unit 1806. Alternatively, the audio data is output to the memory 1802 for further processing.

In this embodiment of this application, the electronic device is connected to an external headset in a wired or wireless manner (for example, connected through a Bluetooth module). The communication unit 1806 is configured to send a to-be-recognized scene image to the training device, and receive a classification result of the scene image from a server. The processor 1801 is further configured to adjust a noise reduction mode of a headset based on the classification result. Alternatively, the processor 1801 is further configured to adjust a volume value of system volume based on the classification result.

Optionally, the processor 1801 is configured to perform scene recognition on the to-be-recognized scene image, to obtain a classification result. The processor 1801 adjusts a noise reduction mode of the headset based on the classification result. Alternatively, the processor 1801 is further configured to adjust a volume value of system volume based on the classification result.

An embodiment of this application provides a computer-readable medium. A computer-readable storage medium is configured to store a computer program. When the computer program runs on a computer, the computer is enabled to perform the method performed by the training device in the foregoing method embodiment. Alternatively, when the computer program runs on a computer, the computer is enabled to perform the method performed by the execution device in the foregoing method embodiment.

An embodiment of this application provides a chip. The chip includes a processor and a communication interface. The communication interface is, for example, an input/output interface, a pin, or a circuit. The processor is configured to read instructions to perform the method performed by the training device in the foregoing method embodiment. Alternatively, the processor is configured to read instructions to perform the method performed by the execution device in the foregoing method embodiment.

An embodiment of this application provides a computer program product. When the computer program product is executed by a computer, the method performed by the training device in the foregoing method embodiment is implemented. Alternatively, when the computer program product is executed by a computer, the method executed by the execution device in the foregoing method embodiment is implemented.

Optionally, the processor mentioned above is a general-purpose central processing unit (CPU), a microprocessor, or an application-specific integrated circuit (application-specific integrated circuit, ASIC).

Those skilled in the art are able to clearly understand that, for easy and concise description, the specific working processes of the system, apparatus, and module described previously may refer to the corresponding processes in the method embodiment, and are not described herein.

## Claims

1. A model training method, applied to a training device and comprising:
obtaining (S10, S20) a first training data set, wherein the first training data set comprises a plurality of first images;
recognizing (S21) a first region in each first image by using an object detection model, wherein the first region is an image region irrelevant to scene recognition, and the first region contains an object irrelevant to the scene recognition;
performing (S22) masking on each first region in each first image to obtain a third image;
obtaining (S23) a plurality of sample object images generated by an image generative model, wherein the sample object image is an image of the object irrelevant to the scene recognition;
respectively replacing (S24) a masked first region in the third image with the plurality of sample object images, to obtain a plurality of target images, wherein each target image and the respective third image correspond to a label of a first category; and
training (S25) a first convolutional neural network by using a data set of the target image, and training a second convolutional neural network by using a data set of the third image, the data set of the third image comprising the plurality of third images, to obtain a scene recognition model, wherein the scene recognition model comprises the first convolutional neural network and the second convolutional neural network;
wherein before the recognizing (S21) the first region in each first image by using the object detection model, the method further comprises:
inputting (S11) each first image to an image recognition model, and obtaining a first classification result of the first image and a heat map of the first image by using the image recognition model, wherein the heat map is used to display a region in which a target object is located, an image feature of the target object is an image feature irrelevant to the scene recognition, and a category indicated by the first classification result is a non-scene category or an incorrect scene category;
performing (S12) masking on a second region other than the first region in which the target object is located in each first image, to obtain a second image; and
training (S13) a first model by using a second training data set, the second training data set comprising a plurality of second images, each second image obtained for each first image, to obtain the object detection model, wherein the second training data set comprises a plurality of sample data, the sample data comprises input data and output data, the input data is the second image, the output data is location coordinates, and the location coordinates indicate a region in which the target object is located.

2. The method according to claim 1, wherein the method further comprises:
training (S14) a generative adversarial network GAN by using the plurality of second images, to obtain the image generative model.

3. The method according to claim 1 or 2, wherein the training a first convolutional neural network by using a data set of the target image, and training a second convolutional neural network by using a data set of the third image comprises:
extracting an image feature of the target image through a first convolutional layer of the first convolutional neural network, extracting an image feature of the third image through a second convolutional layer of the second convolutional neural network, and outputting the image feature of the third image to the first convolutional layer, to fuse with the image feature of the target image; and
outputting, through an output layer of the first convolutional neural network, the label of the first category based on a fused image feature.

4. A scene recognition method, applied to an execution device and comprising:
obtaining (S30) a to-be-recognized first scene image;
detecting (S31), by using an object detection model according to claim 1, a first region in which an object irrelevant to scene recognition is located in the first scene image;
performing (S32) masking on the first region to obtain a second scene image; and
inputting (S33) the first scene image to a first convolutional neural network in a scene recognition model according to claim 1, inputting the second scene image to a second convolutional neural network in the scene recognition model, and outputting a classification result by using the scene recognition model, wherein the first convolutional neural network is obtained by a training method according to claim 1 , the second convolutional neural network is obtained by the training method according to claim 1 ;
wherein the inputting (S33) the first scene image to the first convolutional neural network in a scene recognition model, inputting the second scene image to the second convolutional neural network in the scene recognition model, and outputting the classification result by using the scene recognition model comprises:
extracting an image feature of the first scene image through a first convolutional layer of the first convolutional neural network, extracting an image feature of the second scene image through a second convolutional layer of the second convolutional neural network, and outputting the image feature of the second scene image to the first convolutional layer, to fuse with the image feature of the first scene image; and
outputting, through an output layer of the first convolutional neural network, the classification result based on the fused image feature.

5. The method according to claim 4, wherein if the classification result indicates a first scene, there is a correspondence between the first scene and a first noise reduction mode of a headset; and
the execution device is a terminal device, the execution device is connected to the headset, and the method further comprises:
adjusting a noise reduction mode of the headset to the first noise reduction mode based on the classification result;
or
the execution device is a server, user equipment is connected to the headset, and the method further comprises:
sending the classification result to the user equipment, wherein the classification result is used to trigger the user equipment to adjust a noise reduction mode of the headset to the first noise reduction mode.

6. The method according to claim 4, wherein if the classification result indicates a first scene, there is a correspondence between the first scene and a first volume value; and
the execution device is a terminal device, and the method further comprises:
adjusting system volume of the execution device to the first volume value based on the classification result;
or
the execution device is a server, and the method further comprises:
sending the classification result to user equipment, wherein the classification result is used to trigger the user equipment to adjust system volume of the user equipment to the first volume value.

7. The method according to claim 4 to 6, wherein the obtaining (S30) a to-be-recognized first scene image comprises:
receiving the to-be-recognized first scene image sent by the user equipment;
or
collecting the to-be-recognized first scene image through a camera or an image sensor.

8. An electronic device, comprising: a processor, wherein the processor is coupled to a memory, the memory is configured to store a program or instructions, and when the program or the instruction is executed by the processor, the electronic device is enabled to perform the method according to any one of claims 1 to 3; or when the program or the instruction is executed by the processor, the electronic device is enabled to perform the method according to any one of claims 4 to 7.

9. A computer program product, wherein the computer program product comprises computer program code, and when the computer program code is executed by a computer, the computer is enabled to implement the method according to any one of claims 1 to 3; or when the computer program code is executed by a computer, the computer is enabled to implement the method according to any one of claims 4 to 7.

10. A computer-readable storage medium, wherein the computer-readable storage medium is configured to store a computer program or instructions, wherein when the computer program or the instruction is executed, the computer is enabled to perform the method according to any one of claims 1 to 3; or when the computer program or the instruction is executed, the computer is enabled to perform the method according to any one of claims 4 to 7.

## Patentansprüche

1. Verfahren zum Trainieren eines Modells, angewandt auf ein Trainingsgerät und umfassend:
Erlangen (S10, S20) eines ersten Trainingsdatensatzes, wobei der erste Trainingsdatensatz eine Vielzahl von ersten Bildern umfasst;
Erkennen (S21) einer ersten Region in jedem ersten Bild unter Verwendung eines Objektdetektionsmodells, wobei die erste Region eine für Szenenerkennung irrelevante Bildregion ist und die erste Region ein für die Szenenerkennung irrelevantes Objekt enthält,
Durchführen (S22) von Maskierung an jeder ersten Region in jedem ersten Bild, um ein drittes Bild zu erlangen;
Erlangen (S23) einer Vielzahl von Beispielsobjektbildern, die von einem Bild erzeugenden Modell erzeugt werden, wobei das Beispielsobjektbild ein für die Szenenerkennung irrelevantes Bild des Objekts ist;
jeweiliges Ersetzen (S24) einer maskierten ersten Region in dem dritten Bild durch die Vielzahl von Beispielsobjektbildern, um eine Vielzahl von Zielbildern zu erlangen, wobei jedes Zielbild und das jeweilige dritte Bild mit einer Kennzeichnung einer ersten Kategorie korrespondieren; und
Trainieren (S25) eines ersten faltungsneuronalen Netzwerks unter Verwendung eines Datensatzes des Zielbilds und Trainieren eines zweiten faltungsneuronalen Netzwerks unter Verwendung eines Datensatzes des dritten Bilds, wobei der Datensatz des dritten Bilds die Vielzahl von dritten Bildern umfasst, um ein Szenenerkennungsmodell zu erlangen, wobei das Szenenerkennungsmodell das erste faltungsneuronale Netzwerk und das zweite faltungsneuronale Netzwerk umfasst;
wobei das Verfahren vor dem Erkennen (S21) der ersten Region in jedem ersten Bild unter Verwendung des Objektdetektionsmodells ferner umfasst:
Eingeben (S11) jedes ersten Bilds in ein Bilderkennungsmodell und Erlangen eines ersten Klassifizierungsergebnisses des ersten Bilds und einer Wärmekarte des ersten Bilds unter Verwendung des Bilderkennungsmodells, wobei die Wärmekarte verwendet wird, eine Region anzuzeigen, in der ein Zielobjekt angeordnet ist, ein Bildmerkmal des Zielobjekts ein für die Szenenerkennung irrelevantes Bildmerkmal ist und eine durch das erste Klassifizierungsergebnis angegebene Kategorie eine Nicht-Szenen-Kategorie oder eine falsche Szenenkategorie ist;
Durchführen (S12) von Maskierung an einer zweiten Region, die von der ersten Region verschieden ist, in der das Zielobjekt in jedem ersten Bild angeordnet ist, um ein zweites Bild zu erlangen; und
Trainieren (S13) eines ersten Modells unter Verwendung eines zweiten Trainingsdatensatzes, wobei der zweite Trainingsdatensatz eine Vielzahl von zweiten Bildern umfasst, jedes zweite Bild für jedes erste Bild erlangt wird, um das Objektdetektionsmodell zu erlangen, wobei der zweite Trainingsdatensatz eine Vielzahl von Beispielsdaten umfasst, die Beispielsdaten Eingabedaten und Ausgabedaten umfassen, die Eingabedaten das zweite Bild sind, die Ausgabedaten Ortskoordinaten sind und die Ortskoordinaten eine Region angeben, in der das Zielobjekt angeordnet ist.

2. Verfahren nach Anspruch 1, wobei das Verfahren ferner umfasst:
Trainieren (S14) eines generativen adversarialen Netzwerks GAN unter Verwendung der Vielzahl von zweiten Bildern, um das Bild erzeugende Modell zu erlangen.

3. Verfahren nach Anspruch 1 oder 2, wobei das Trainieren eines ersten faltungsneuronalen Netzwerks unter Verwendung eines Datensatzes des Zielbilds und das Trainieren eines zweiten faltungsneuronalen Netzwerks unter Verwendung eines Datensatzes des dritten Bilds umfasst:
Extrahieren eines Bildmerkmals des Zielbilds durch eine erste Faltungsschicht des ersten faltungsneuronalen Netzwerks, Extrahieren eines Bildmerkmals des dritten Bilds durch eine zweite Faltungsschicht des zweiten faltungsneuronalen Netzwerks und Ausgeben des Bildmerkmals des dritten Bilds zu der ersten Faltungsschicht, um mit dem Bildmerkmal des Zielbilds zu fusionieren; und
Ausgeben, durch eine Ausgabeschicht des ersten faltungsneuronalen Netzwerks, der Kennzeichnung der ersten Kategorie basierend auf einem fusionierten Bildmerkmal.

4. Szenenerkennungsverfahren, angewandt auf ein Ausführungsgerät und umfassend:
Erlangen (S30) eines ersten Szenenbilds, das erkannt werden soll;
Detektieren (S31), unter Verwendung eines Objektdetektionsmodells nach Anspruch 1, einer ersten Region, in der ein für Szenenerkennung irrelevantes Objekt angeordnet ist, in dem ersten Szenenbild;
Durchführen (S32) von Maskierung an der ersten Region, um ein zweites Szenenbild zu erlangen; und
Eingeben (S33) des ersten Szenenbilds in ein erstes faltungsneuronales Netzwerk in einem Szenenerkennungsmodell nach Anspruch 1, Eingeben des zweiten Szenenbilds in ein zweites faltungsneuronales Netzwerk in dem Szenenerkennungsmodell und Ausgeben eines Klassifizierungsergebnisses unter Verwendung des Szenenerkennungsmodells, wobei das erste faltungsneuronale Netzwerk durch ein Trainingsverfahren nach Anspruch 1 erlangt wird, das zweite faltungsneuronale Netzwerk durch das Trainingsverfahren nach Anspruch 1 erlangt wird;
wobei das Eingeben (S33) des ersten Szenenbilds in das erste faltungsneuronale Netzwerk in einem Szenenerkennungsmodell, das Eingeben des zweiten Szenenbilds in das zweite faltungsneuronale Netzwerk in dem Szenenerkennungsmodell und das Ausgeben des Klassifizierungsergebnisses unter Verwendung des Szenenerkennungsmodells umfassen:
Extrahieren eines Bildmerkmals des ersten Szenenbilds durch eine erste Faltungsschicht des ersten faltungsneuronalen Netzwerks, Extrahieren eines Bildmerkmals des zweiten Szenenbilds durch eine zweite Faltungsschicht des zweiten faltungsneuronalen Netzwerks und Ausgeben des Bildmerkmals des zweiten Szenenbilds zu der ersten Faltungsschicht, um mit dem Bildmerkmal des ersten Szenenbilds zu fusionieren; und
Ausgeben, durch eine Ausgabeschicht des ersten faltungsneuronalen Netzwerks, des Klassifizierungsergebnisses basierend auf dem fusionierten Bildmerkmal.

5. Verfahren nach Anspruch 4, wobei, wenn das Klassifizierungsergebnis eine erste Szene angibt, eine Korrespondenz zwischen der ersten Szene und einem ersten Rauschunterdrückungsmodus einer Mikrofon-Kopfhörer-Kombination besteht; und das Ausführungsgerät ein Endgerät ist, das Ausführungsgerät mit der Mikrofon-Kopfhörer-Kombination verbunden ist und das Verfahren ferner umfasst:
Anpassen eines Rauschunterdrückungsmodus der Mikrofon-Kopfhörer-Kombination an den ersten Rauschunterdrückungsmodus basierend auf dem Klassifizierungsergebnis;
oder
das Ausführungsgerät ein Server ist, eine Benutzereinrichtung mit der Mikrofon-Kopfhörer-Kombination verbunden ist und das Verfahren ferner umfasst:
Senden des Klassifizierungsergebnisses an die Benutzereinrichtung, wobei das Klassifizierungsergebnis verwendet wird, die Benutzereinrichtung auszulösen, einen Rauschunterdrückungsmodus der Mikrofon-Kopfhörer-Kombination an den ersten Rauschunterdrückungsmodus anzupassen.

6. Verfahren nach Anspruch 4, wobei, wenn das Klassifizierungsergebnis eine erste Szene angibt, eine Korrespondenz zwischen der ersten Szene und einem ersten Lautstärkewert besteht; und
das Ausführungsgerät ein Endgerät ist und das Verfahren ferner umfasst:
Anpassen einer Systemlautstärke des Ausführungsgeräts an den ersten Lautstärkewert basierend auf dem Klassifizierungsergebnis;
oder
das Ausführungsgerät ein Server ist und das Verfahren ferner umfasst:
Senden des Klassifizierungsergebnisses an eine Benutzereinrichtung, wobei das Klassifizierungsergebnis verwendet wird, die Benutzereinrichtung auszulösen, eine Systemlautstärke der Benutzereinrichtung an den ersten Lautstärkewert anzupassen.

7. Verfahren nach Anspruch 4 bis 6, wobei das Erlangen (S30) eines ersten Szenenbilds, das erkannt werden soll, umfasst:
Empfangen des durch die Benutzereinrichtung gesandten ersten Szenenbilds, das erkannt werden soll;
oder
Erfassen des ersten Szenenbilds, das erkannt werden soll, durch eine Kamera oder einen Bildsensor.

8. Elektronisches Gerät, umfassend: einen Prozessor, wobei der Prozessor an einen Speicher gekoppelt ist, der Speicher konfiguriert ist, ein Programm oder Anweisungen zu speichern, und, wenn das Programm oder die Anweisung von dem Prozessor ausgeführt wird, das elektronische Gerät in die Lage versetzt wird, das Verfahren nach einem der Ansprüche 1 bis 3 durchzuführen; oder, wenn das Programm oder die Anweisung von dem Prozessor ausgeführt wird, das elektronische Gerät in die Lage versetzt wird, das Verfahren nach einem der Ansprüche 4 bis 7 durchzuführen.

9. Computerprogrammprodukt, wobei das Computerprogrammprodukt Computerprogrammcode umfasst, und, wenn der Computerprogrammcode von einem Computer ausgeführt wird, der Computer in die Lage versetzt wird, das Verfahren nach einem der Ansprüche 1 bis 3 zu implementieren; oder, wenn der Computerprogrammcode von einem Computer ausgeführt wird, der Computer in die Lage versetzt wird, das Verfahren nach einem der Ansprüche 4 bis 7 zu implementieren.

10. Computerlesbares Speichermedium, wobei das computerlesbare Speichermedium konfiguriert ist, ein Computerprogramm oder Anweisungen zu speichern, wobei, wenn das Computerprogramm oder die Anweisung ausgeführt wird, der Computer in die Lage versetzt wird, das Verfahren nach einem der Ansprüche 1 bis 3 durchzuführen; oder, wenn das Computerprogramm oder die Anweisung ausgeführt wird, der Computer in die Lage versetzt wird, das Verfahren nach einem der Ansprüche 4 bis 7 durchzuführen.

## Revendications

1. Procédé d'apprentissage de modèle, appliqué à un dispositif d'apprentissage et comprenant :
l'obtention (S10, S20) d'un premier ensemble de données d'apprentissage, dans lequel le premier ensemble de données d'apprentissage comprend une pluralité de premières images ;
la reconnaissance (S21) d'une première région dans chaque première image à l'aide d'un modèle de détection d'objets, dans lequel la première région est une région d'image non pertinente pour une reconnaissance de scène, et la première région contient un objet non pertinent pour une reconnaissance de scène ;
la réalisation (S22) d'un masquage sur chaque première région dans chaque première image pour obtenir une troisième image ;
l'obtention (S23) d'une pluralité d'images-échantillons d'objets générée par un modèle génératif d'images, dans lequel l'image-échantillon d'objet est une image de l'objet non pertinent pour une reconnaissance de scène ;
le remplacement respectif (S24) d'une première région masquée dans la troisième image par la pluralité d'images-échantillons d'objets, pour obtenir une pluralité d'images cibles, dans lequel chaque image cible et la troisième image respective correspondent à une étiquette d'une première catégorie ; et
l'apprentissage (S25) d'un premier réseau neuronal convolutif à l'aide d'un ensemble de données de l'image cible, et l'apprentissage d'un second réseau neuronal convolutif à l'aide d'un ensemble de données de la troisième image, l'ensemble de données de la troisième image comprenant la pluralité de troisièmes images, pour obtenir un modèle de reconnaissance de scène, dans lequel le modèle de reconnaissance de scène comprend le premier réseau neuronal convolutif et le second réseau neuronal convolutif ;
le procédé comprenant en outre, avant la reconnaissance (S21) de la première région dans chaque première image à l'aide du modèle de détection d'objets :
l'entrée (S11) de chaque première image dans un modèle de reconnaissance d'image, et l'obtention d'un premier résultat de classification de la première image et d'une carte thermique de la première image à l'aide du modèle de reconnaissance d'image, dans lequel la carte thermique sert à afficher une région dans laquelle se trouve un objet cible, une caractéristique d'image de l'objet cible est une caractéristique d'image non pertinente pour une reconnaissance de scène, et une catégorie indiquée par le premier résultat de classification est une catégorie non de scène ou une catégorie de scène incorrecte ;
la réalisation (S12) d'un masquage sur une seconde région autre que la première région dans laquelle se trouve l'objet cible dans chaque première image, afin d'obtenir une deuxième image ; et
l'apprentissage (S13) d'un premier modèle à l'aide d'un second ensemble de données d'apprentissage, le second ensemble de données d'apprentissage comprenant une pluralité de deuxièmes images, chaque deuxième image étant obtenue pour chaque première image, pour obtenir le modèle de détection d'objets, dans lequel le second ensemble de données d'apprentissage comprend une pluralité de données-échantillons, les données-échantillons comprenant des données d'entrée et des données de sortie, les données d'entrée sont la deuxième image, les données de sortie sont des coordonnées d'emplacement, et les coordonnées d'emplacement indiquent une région dans laquelle se trouve l'objet cible.

2. Procédé selon la revendication 1, le procédé comprenant en outre :
l'apprentissage (S14) d'un réseau antagoniste génératif GAN à l'aide de la pluralité de deuxièmes images, pour obtenir le modèle génératif d'images.

3. Procédé selon la revendication 1 ou 2, dans lequel l'apprentissage d'un premier réseau neuronal convolutif à l'aide d'un ensemble de données de l'image cible, et l'apprentissage d'un second réseau neuronal convolutif à l'aide d'un ensemble de données de la troisième image comprend :
l'extraction d'une caractéristique d'image de l'image cible par le biais d'une première couche convolutive du premier réseau neuronal convolutif, l'extraction d'une caractéristique d'image de la troisième image par le biais d'une seconde couche convolutive du second réseau neuronal convolutif, et la délivrance en sortie de la caractéristique d'image de la troisième image à la première couche convolutive, pour la fusionner avec la caractéristique d'image de l'image cible ; et
la délivrance en sortie, par le biais d'une couche de sortie du premier réseau neuronal convolutif, de l'étiquette de la première catégorie sur la base d'une caractéristique d'image fusionnée.

4. Procédé de reconnaissance de scène, appliqué à un dispositif d'exécution et comprenant :
l'obtention (S30) d'une première image de scène à reconnaître ;
la détection (S31), à l'aide d'un modèle de détection d'objets selon la revendication 1, d'une première région dans laquelle un objet non pertinent pour une reconnaissance de scène se trouve dans la première image de scène ;
la réalisation (S32) d'un masquage sur la première région pour obtenir une deuxième image de scène ; et
l'entrée (S33) de la première image de scène dans un premier réseau neuronal convolutif dans un modèle de reconnaissance de scène selon la revendication 1, l'entrée de la deuxième image de scène dans un second réseau neuronal convolutif dans le modèle de reconnaissance de scène, et la délivrance en sortie d'un résultat de classification à l'aide du modèle de reconnaissance de scène, dans lequel le premier réseau neuronal convolutif est obtenu par un procédé d'apprentissage selon la revendication 1, le second réseau neuronal convolutif est obtenu par le procédé d'apprentissage selon la revendication 1 ;
dans lequel l'entrée (S33) de la première image de scène dans le premier réseau neuronal convolutif dans un modèle de reconnaissance de scène, l'entrée de la deuxième image de scène dans le second réseau neuronal convolutif dans le modèle de reconnaissance de scène, et la délivrance en sortie du résultat de classification à l'aide du modèle de reconnaissance de scène comprennent :
l'extraction d'une caractéristique d'image de la première scène par le biais d'une première couche convolutive du premier réseau neuronal convolutif, l'extraction d'une caractéristique d'image de la deuxième image de scène par le biais d'une seconde couche convolutive du second réseau convolutif, et la délivrance en sortie de la caractéristique d'image de la deuxième image de scène à la première couche convolutive, pour la fusionner avec la caractéristique d'image de la première image de scène ; et
la délivrance en sortie, par le biais d'une couche de sortie du premier réseau neuronal convolutif, du résultat de classification sur la base de la caractéristique d'image fusionnée.

5. Procédé selon la revendication 4, dans lequel si le résultat de classification indique une première scène, une correspondance existe entre la première scène et un premier mode de réduction du bruit d'un casque ; et
le dispositif d'exécution est un dispositif terminal, le dispositif d'exécution est connecté au casque, et le procédé comprend en outre :
le réglage d'un mode de réduction de bruit du casque au premier mode de réduction du bruit sur la base du résultat de classification ; ou
le dispositif d'exécution est un serveur, l'équipement utilisateur est connecté au casque, et le procédé comprend en outre :
l'envoi du résultat de classification à l'équipement utilisateur, dans lequel le résultat de classification sert à déclencher l'équipement utilisateur pour régler un mode de réduction de bruit du casque au premier mode de réduction de bruit.

6. Procédé selon la revendication 4, dans lequel si le résultat de classification indique une première scène, une correspondance existe entre la première scène et une première valeur de volume ; et
le dispositif d'exécution est un dispositif terminal, et le procédé comprend en outre :
le réglage du volume de système du dispositif d'exécution à la première valeur de volume sur la base du résultat de classification ; ou
le dispositif d'exécution est un serveur, et le procédé comprend en outre :
l'envoi du résultat de classification à l'équipement utilisateur, dans lequel le résultat de classification sert à déclencher l'équipement utilisateur pour régler le volume de système de l'équipement utilisateur à la première valeur de volume.

7. Procédé selon les revendications 4 à 6, dans lequel l'obtention (S30) d'une première image de scène à reconnaître comprend :
la réception de la première image de scène à reconnaître envoyée par l'équipement utilisateur ;
ou
la capture de la première image de scène à reconnaître par une caméra ou un capteur d'image.

8. Dispositif électronique, comprenant : un processeur, dans lequel le processeur est couplé à une mémoire, la mémoire est configurée pour stocker un programme ou des instructions, et une fois le programme ou l'instruction exécuté(e) par le processeur, le dispositif électronique est en mesure de réaliser le procédé selon l'une quelconque des revendications 1 à 3 ; ou une fois le programme ou l'instruction exécuté(e) par le processeur, le dispositif électronique est en mesure de réaliser le procédé selon l'une quelconque des revendications 4 à 7.

9. Produit-programme d'ordinateur, le produit-programme d'ordinateur comprenant un code de programme d'ordinateur, et une fois le code de programme d'ordinateur exécuté par un ordinateur, l'ordinateur étant en mesure de mettre en œuvre le procédé selon l'une quelconque des revendications 1 à 3 ; ou une fois le code de programme d'ordinateur exécuté par un ordinateur, l'ordinateur étant en mesure de mettre en œuvre le procédé selon l'une quelconque des revendications 4 à 7.

10. Support de stockage lisible par ordinateur, le support de stockage lisible étant configuré pour stocker un programme d'ordinateur ou des instructions, dans lequel, une fois le programme d'ordinateur ou l'instruction exécuté(e), l'ordinateur est en mesure de réaliser le procédé selon l'une quelconque des revendications 1 à 3 ; ou une fois le programme d'ordinateur ou l'instruction exécuté(e), l'ordinateur est en mesure de réaliser le procédé selon l'une quelconque des revendications 4 à 7.
